# EUROPEAN PATENT SPECIFICATION

(11) **EP 3 863 266 B1**
(45) Date of publication and mention of the grant of the patent: **04.12.2024**
(21) Application number: 21154011.7
(22) Date of filing: 28.01.2021
(51) Int. Cl.: H04M 1/02, H04M 1/72409, G06F 1/16, G06K 7/10

(54) **INFORMATION TERMINAL**
INFORMATIONSENDGERÄT
TERMINAL D'INFORMATION

(30) Priority: 07.02.2020 JP 2020019735
(43) Date of publication of application: 11.08.2021
(73) Proprietor: Casio Computer Co., Ltd., Tokyo 151-8543 (JP)
(72) Inventor: MOCHIZUKI, Yoshiaki, Hamura-shi, Tokyo, 205-8555 (JP); CHIBA, Yasunori, Hamura-shi, Tokyo, 205-8555 (JP); DONG, Gu, Hamura-shi, Tokyo, 205-8555 (JP); USUI, Yasunori, Hamura-shi, Tokyo, 205-8555 (JP)
(74) Representative: Grünecker Patent- und Rechtsanwälte PartG mbB

(56) References cited:
- EP-A1- 3 296 918
- WO-A1-2017/087222
- US-A1- 2018 084 660

## Description

The present invention relates to an information terminal such as a portable information processing device and a portable communication device.

WO 2017/087222 A1 discloses a handheld scanner with an inclined section falling towards one longitudinal end of the scanner. A connector for an expansion module is covered by the inclined section.

The handheld scanner has the problem that the expansion module cannot be exchanged without removing the complete rear bezel.

US 2018/084660 A1 describes a mobile terminal provided with an apparatus case. The apparatus case includes a display unit in the upper portion and an input unit in the lower portion. The input unit comprises a plurality of keys.

EP 3 296 918 A1 relates to a reading device like a barcode scanner, wherein a portion protruding from a back side of the device exhibits two inclined surfaces facing in different directions.

For example, an information terminal is known which has a structure where an expansion connector has been provided in a side portion of its case and a connection section of an extended display device has been detachably attached to the expansion connector so as to electrically connect the case with the extended display device and display the information of a display target on the extended display device (for example, refer to Japanese Patent Application Laid-Open (Kokai) Publication No. 2003-233437).

In the case of the above-described information terminal, when the connection section of the extended display device is attached to the expansion connector provided in the side portion of the case so as to electrically connect the case with the extended display device, the extended display device notably sticks out from the side of the case. This structure causes a problem in that, when being carried with the extended display device attached to the case, the information terminal cannot be favorably carried due to the presence of the extended display device.

The invention is defined by the independent claim. The dependent claims describe advantageous embodiments.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

The present invention can be more clearly understood by the detailed description below being considered together with the following drawings.
FIG. 1 is a perspective view of a first embodiment in which the present invention has been applied in a portable terminal;
FIG. 2 is a perspective view of the back surface side of the portable terminal shown in FIG. 1;
FIG. 3 is an enlarged cross-sectional view of the portable terminal taken along the A-A arrow view shown in FIG. 2;
FIG. 4 is an enlarged cross-sectional view of the portable terminal taken along the B-B arrow view shown in FIG. 1;
FIG. 5 is an enlarged perspective view of a main portion showing a housing projection section of the portable terminal shown in FIG. 2;
FIG. 6 is an enlarged cross-sectional view of the housing projection section of the portable terminal taken along the C-C arrow view shown in FIG. 5;
FIG. 7 is an enlarged cross-sectional view of the main portion, in which an expansion cover and an expansion board have been detached from the housing projection section of the portable terminal shown in FIG. 6;
FIG. 8 is an exploded perspective view of the main portion of the portable terminal shown in FIG. 7;
FIG. 9 is an enlarged perspective view of a main portion, in which the expansion cover and a first belt attachment fitting shown in FIG. 8 have been detached;
FIG. 10 is a perspective view of the portable terminal shown in FIG. 2, in which a hand belt has been attached to the portable terminal;
FIG. 11 is an enlarged cross-sectional view showing a leg section of the housing projection section of the portable terminal taken along the D-D arrow view shown in FIG. 5;
FIG. 12 is an enlarged cross-sectional view showing leg sections of the housing projection section of the portable terminal taken along the E-E arrow view shown in FIG. 5;
FIG. 13 is an enlarged perspective view showing a state where the leg section shown in FIG. 11 has been disassembled;
FIG. 14 is a perspective view showing a state where a second belt attachment fitting has been attached to the housing projection section of the portable terminal shown in FIG. 2;
FIG. 15 is a perspective view showing a state where the second belt attachment fitting shown in FIG. 14 has been detached from the portable terminal;
FIG. 16 is an enlarged perspective view of the second belt attachment fitting shown in FIG. 15;
FIG. 17 is an enlarged cross-sectional view showing a main portion of the device case of the portable terminal shown in FIG. 4;
FIG. 18 is an enlarged cross-sectional view showing detachment in the device case shown in FIG. 17; and
FIG. 19 is an enlarged cross-sectional view showing a main portion of a molding die for molding an upper case shown in FIG. 4.

### DETAILED DESCRIPTION OF THE PREFERRED EMBODIMENTS

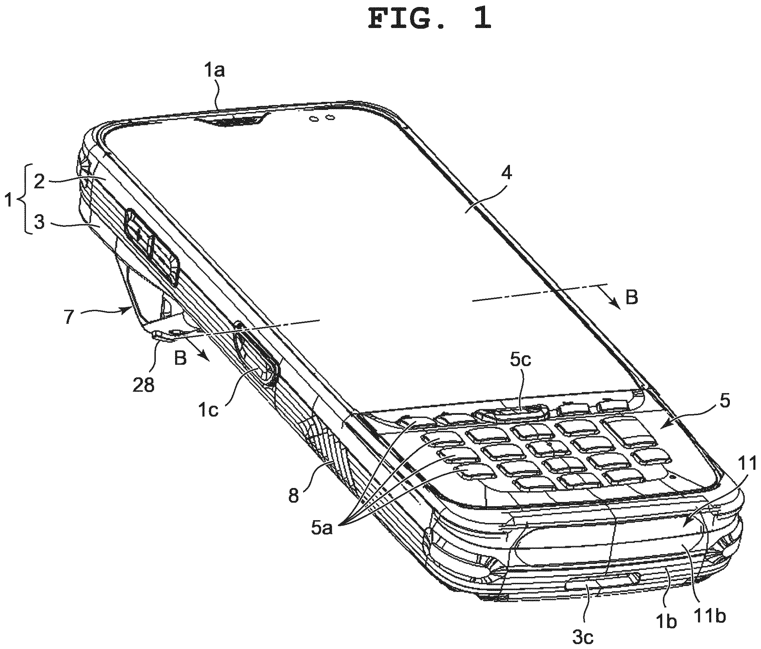

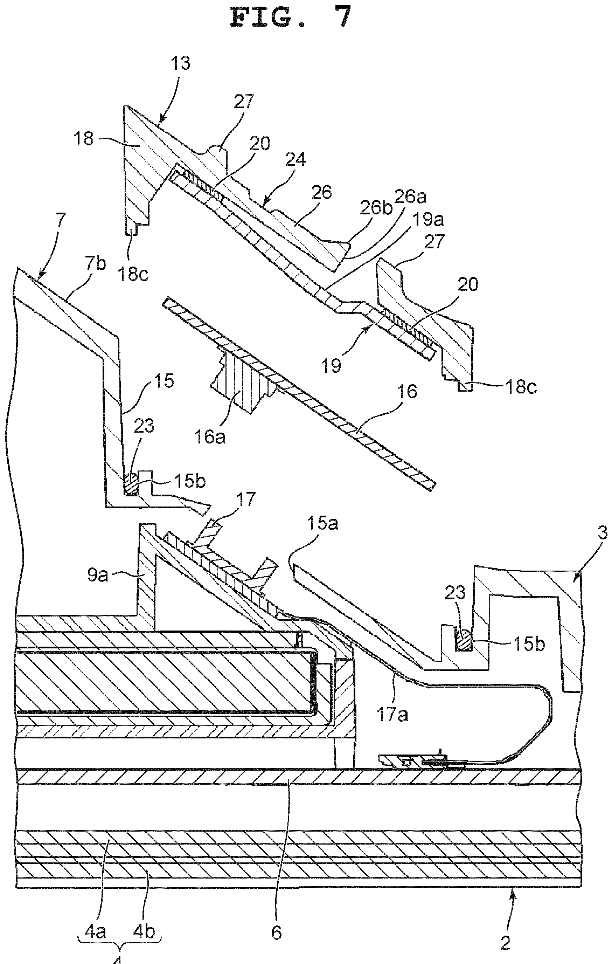

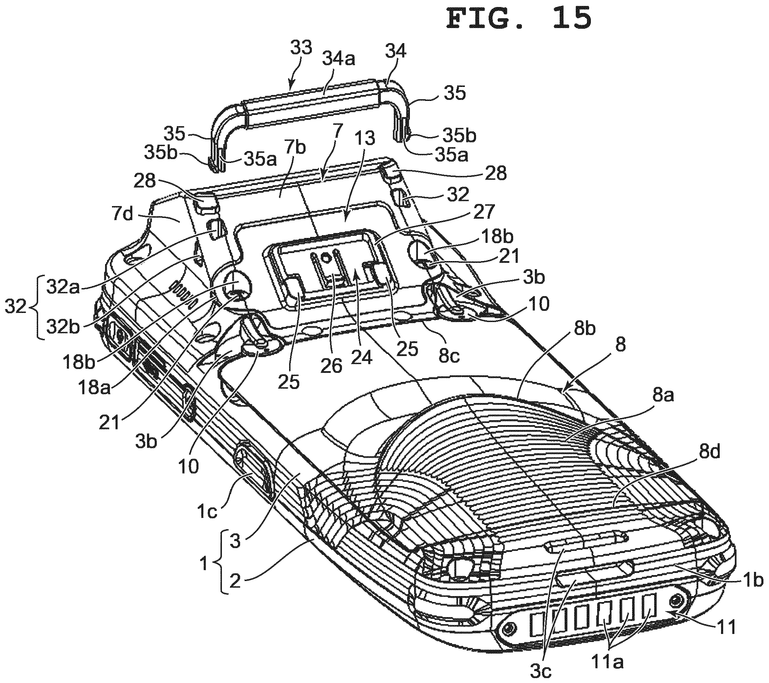

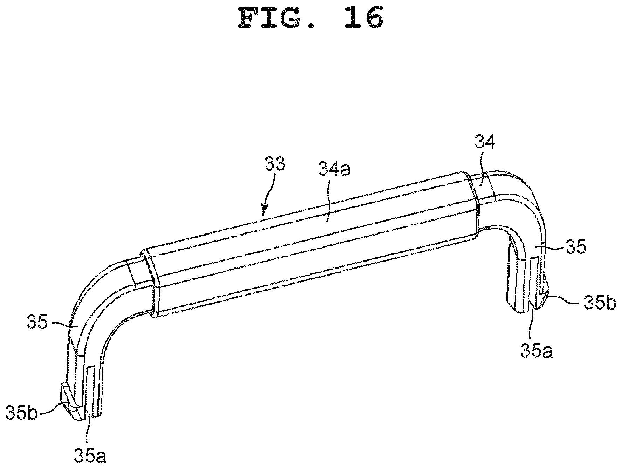

A first embodiment in which the present invention has been applied in a portable terminal will hereinafter be described with reference to FIG. 1 to FIG. 19.

This portable terminal is an information terminal such as a handy terminal for processing information, and has a device case 1, as shown in FIG. 1 to FIG. 3. This device case 1, which is the main body of the terminal, is thinly formed in a substantially rectangular box shape, and includes an upper case 2 on the front surface side and a lower case 3 on the back surface side.

On the front surface of the device case 1, that is, the upper surface of the upper case 2, an input display section 4 and a key input section 5 are parallelly provided, as shown in FIG. 1. The input display section 4 is provided corresponding to a wide area covering about three-fourths of the upper surface of the upper case 2 from one end portion 1a of the device case 1 toward the other end portion 1b side in a longitudinal direction of the device case 1. The key input section 5 is provided corresponding to an area excluding the input display section 4, that is, a narrow area covering about one-fourth of the upper surface of the upper case 2 from the other end portion 1b toward the input display section 4 in the longitudinal direction.

The input display section 4 includes a display panel 4a and a transparent touch panel 4b laminated thereon, as shown in FIG. 1, FIG. 3 and FIG. 4. The display panel 4a is a flat display element such as a liquid crystal display element or an EL (Electro-Luminescence) display element, and is structured to electro-optically display information. The touch panel 4b is structured such that the user can input information by a touch operation while viewing information displayed on the display panel 4a.

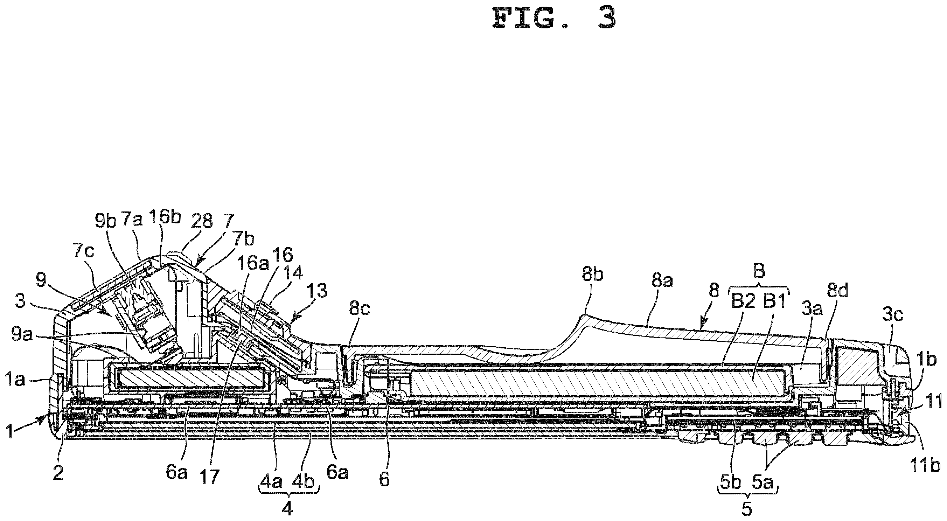

The key input section 5 includes a plurality of key buttons 5a arranged on the upper surface of the upper case 2 and located on the other end portion 1b side of the device case 1, and a switch board 5b arranged inside the upper case 2, as shown in FIG. 1 or FIG. 3. The plurality of key buttons 5a includes an upper surface trigger key 5c in addition to key buttons such as numeric keys and function keys. The switch board 5b is arranged inside the upper case 2 and located under (above in the FIG.3) and corresponding to the plurality of key buttons 5a.

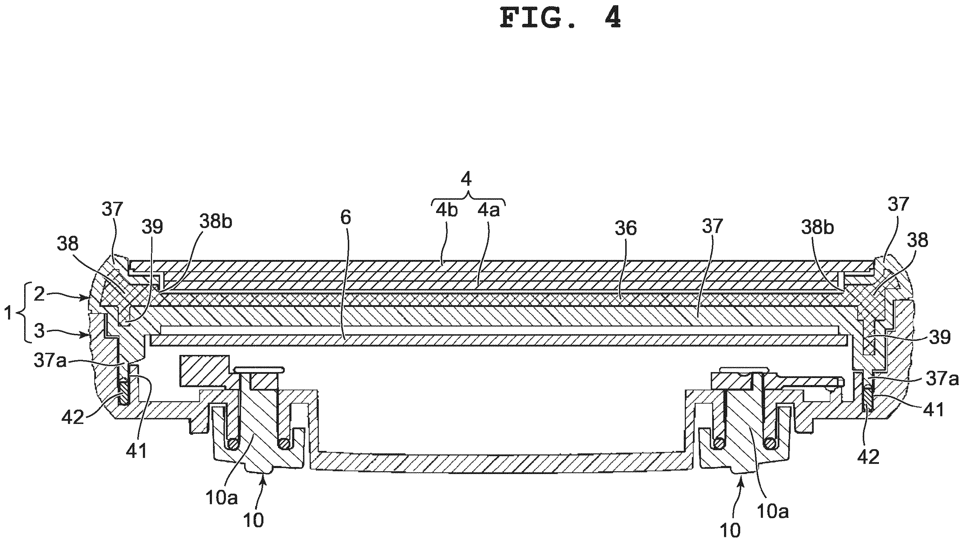

Also, inside the upper case 2, a circuit board 6 is arranged corresponding to the input display section 4, as shown in FIG. 3 and FIG. 4. This circuit board 6 electrically controls the entire portable terminal. More specifically, this circuit board 6 includes various types of electronic components 6a required for the portable terminal, and has electrically connected thereto the input display section 4, the switch board 5b, and later-described sections such as an optical reading section 9, an expansion connector 17, and a connection electrode section 11.

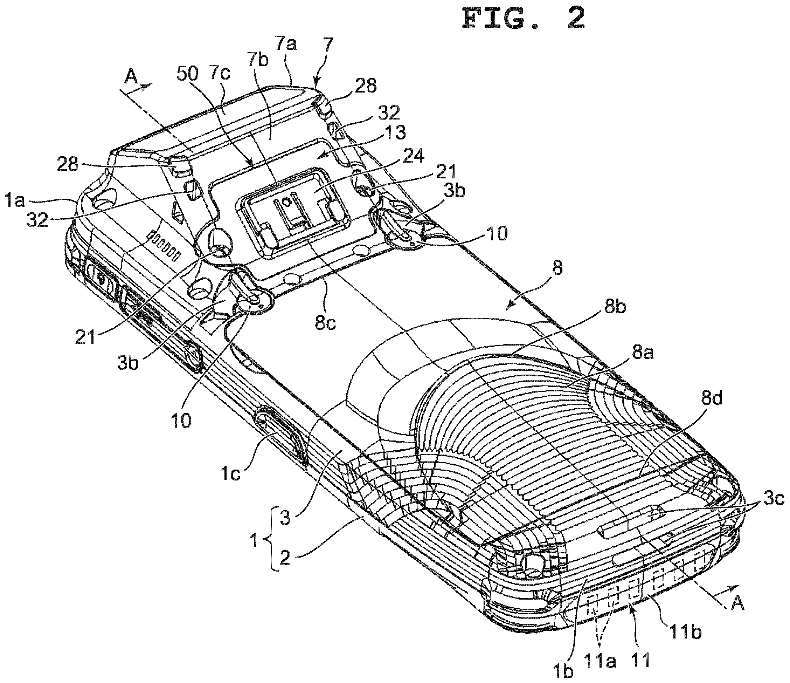

On the other hand, on the back surface of the device case 1, that is, the undersurface (upper surface in FIG. 2) of the lower case 3, a housing projection section 7 and a battery cover 8 are provided, as shown in FIG. 2. The housing projection section 7 is provided corresponding to a narrow area covering about one-fourth of the undersurface of the lower case 3 and located on the one end portion 1a side of the device case 1 in the longitudinal direction. That is, the housing projection section 7 is provided on the side opposite to the input display section 4. The battery cover 8 is provided corresponding to an area excluding the housing projection section 7, that is, a wide area covering about three-fourths of the undersurface of the lower case 3 from the other end portion 1b of the device case 1 toward the housing projection section 7 in the longitudinal direction.

The housing projection section 7 includes a first inclined surface 7a inclining toward the one end portion 1a side of the device case 1 and a second inclined surface 7b inclining toward the other end portion 1b side of the device case 1, and the longitudinal cross-sectional shape of the housing projection section 7 is a triangular shape, so that the housing projection section 7 has a substantially mountain shape as a whole, as shown in FIG. 2 and FIG. 3. On the first inclined surface 7a, an optical window section 7c is provided. Also, in the housing projection section 7, the optical reading section 9 is housed.

The optical reading section 9 includes a unit case 9a and a scanner section 9b which is imaging means attached to the unit case 9a, as shown in FIG. 3. The unit case 9a is provided on the upper case 2 while corresponding to the housing projection section 7 of the lower case 3, and is arranged projecting toward the inside of the housing projection section 7 of the lower case 3.

The scanner section 9b includes a laser reading section and a camera section, and is attached to the unit case 9a while corresponding to the optical window section 7c on the first inclined surface 7a of the housing projection section 7, as shown in FIG. 3. The laser reading section irradiates a product code such as the bar code of a product with a laser beam, and reads out this product code by receiving reflected light. The camera section captures an image of a photographic subject such as a product, an item, and a two dimensional code.

The battery cover 8 openably covers a battery housing section 3a in the lower case 3, as shown in FIG. 2 and FIG. 3. This battery cover 8 has a substantially rectangular shape, and is provided with a grip section 8a located from the other end portion 1b side of the device case 1 to a middle portion of the battery cover 8. The grip section 8a has a curved shape which gradually projects rearward (upward in FIG. 3) with respect to the lower case 3, and a raised section 8b which is arranged between an index finger and a middle finger is formed on this curved portion.

Also, the battery cover 8 is structured such that, when this battery cover 8 is arranged on the lower case 3 and covers the battery housing section 3a of the lower case 3, its one end portion 8c on the housing projection section 7 side of the lower case 3 is arranged on an edge portion of the battery housing section 3a and its other end portion 8d on the other end portion 1b side of the device case 1 engages with another edge portion of the battery housing section 3a, as shown in FIG. 2 and FIG. 3. In this embodiment, the battery cover 8 is structured such that its one end portion 8c is locked by locking levers 10 with this battery cover 8 being arranged on the lower case 3 and covering the battery housing section 3a.

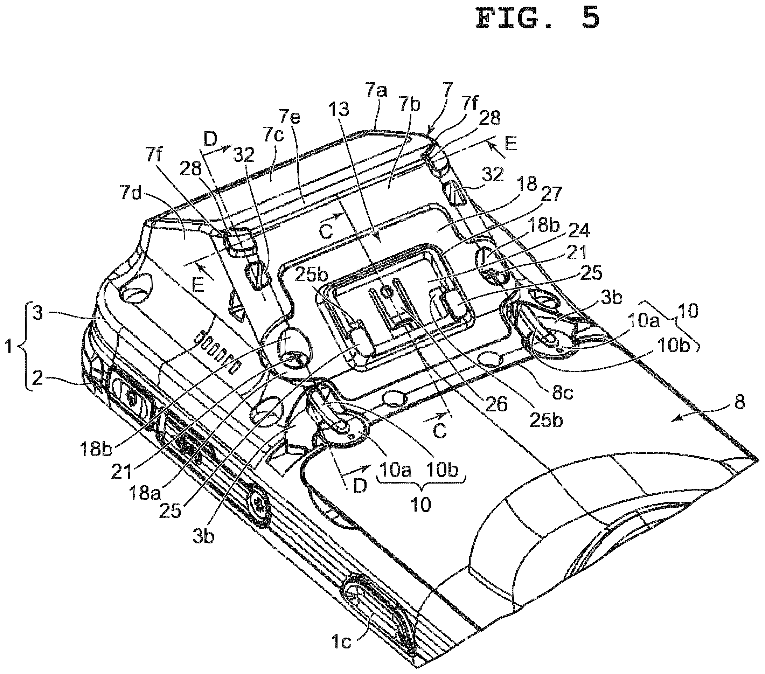

More specifically, the locking levers 10 are provided near the sides of the one end portion 8c of the battery cover 8 arranged close to a base portion of the housing projection section 7 of the lower case 3 on the second inclined surface 7b side, as shown in FIG. 2 and FIG. 5. Each of these locking levers 10 includes a locking section 10a which is rotatably provided on the lower case 3 and detachably locks the one end portion 8c of the battery cover 8 on the housing projection section 7 side, and a lever section 10b which is provided extending toward the housing projection section 7 side from the locking section 10a and used to rotate the locking section 10a.

Also, these locking levers 10 are arranged in substantially fan-shaped lever housing recess sections 3b which are provided in the lower case 3 and extend from portions corresponding to the one end portion 8c of the battery cover 8 on the housing projection section 7 side to lower portions of the second inclined surface 7b of the housing projection section 7, as shown in FIG. 2 and FIG. 5. That is, these locking levers 10 are structured such that the locking sections 10a are rotatably provided on pivot portions of the substantially fan-shaped lever housing recess sections 3b and the lever sections 10b are rotatable in the substantially fan-shaped lever housing recess sections 3b.

As a result, the locking levers 10 are structured such that, when the lever sections 10b are operated in the lever housing recess sections 3b and each locking section 10a is rotated in one direction with the battery cover 8 being arranged on the lower case 3 and covering the battery housing section 3a of the lower case 3, the locking sections 10a press the one end portion 8c of the battery cover 8 against the edge portion of the battery housing section 3a and thereby lock the one end portion 8c, as shown in FIG. 2 and FIG. 5.

Also, these locking levers 10 are structured such that, when the lever sections 10b are operated in the reverse directions with the locking sections 10a locking the one end portion 8c of the battery cover 8, and the locking sections 10a are rotated thereby in the reverse directions, the lock on the one end portion 8c of the battery cover 8 by the locking sections 10a is released, as shown in FIG. 2 and FIG. 5.

On the other hand, on an end surface of the lower case 3 on the other end portion 1b side of the device case 1, the connection electrode section 11 is provided, as shown in FIG. 1 to FIG. 3. This connection electrode section 11 has a plurality of electrodes 11a arranged therein, and is electrically connected to an external device such as a cradle (not shown in the drawings) so as to transmit information or charge a battery pack B in the battery housing section 3a.

The plurality of electrodes 11a in the connection electrode section 11 is covered and protected by an electrode cover 11b made of an elastic material such as rubber, as shown in FIG. 1 to FIG. 3. Also, the battery pack B includes a rechargeable battery B1 and a battery cover section B2. On a side surface of the device case 1, a side surface trigger key 1c is provided.

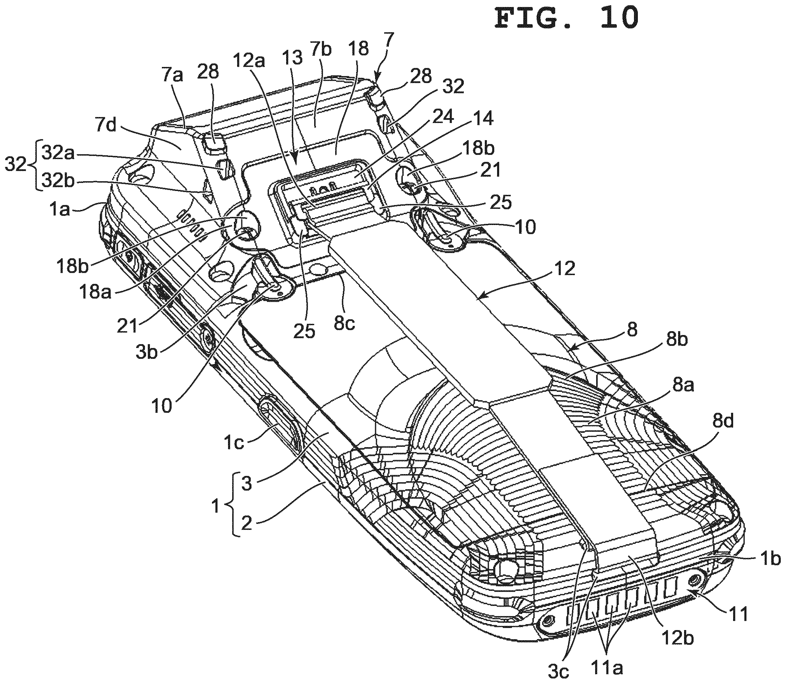

Also, to the lower case 3, a hand belt 12 can be attached in the longitudinal direction of the device case 1, as shown in FIG. 10. This hand belt 12 is structured such that its one end portion 12a can be attached to a first belt attachment fitting 14 of an expansion cover 13 attached to the second inclined surface 7b of the housing projection section 7 of the lower case 3. Also, this hand belt 12 is structured such that its other end portion 12b can be attached to a first belt attachment hole 3c provided in the other end of the lower case 3 and located at the other end portion 1b of the device case 1.

As such, by being attached by the first belt attachment fitting 14 and the first belt attachment hole 3c, the hand belt 12 does not obstruct the plurality of electrodes 11a from above. That is, the connection electrode section 11 can be connected to an external device such as a cradle with the hand belt 12 being attached.

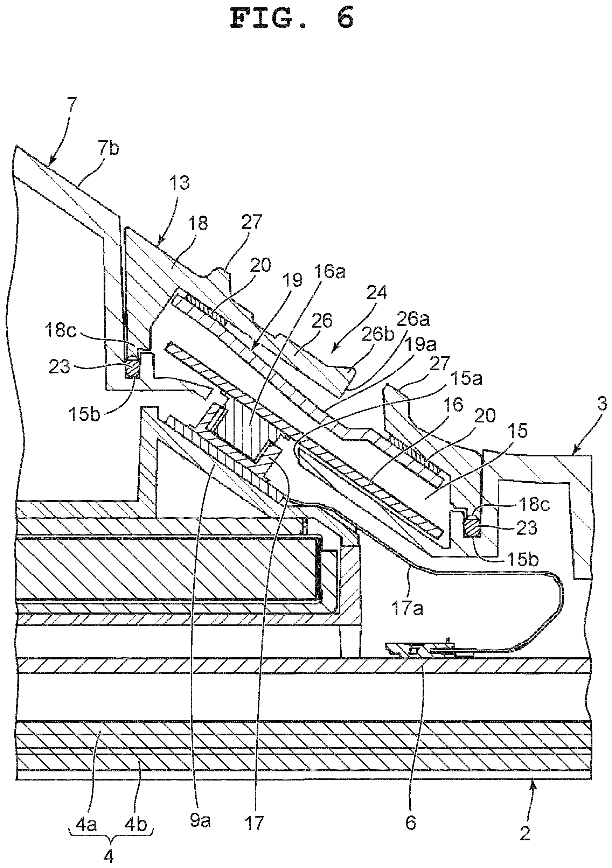

In this embodiment, in the second inclined surface 7b of the housing projection section 7 of the lower case 3, an expansion connector section 50 is provided which includes an expansion housing recess section 15, an expansion board 16, the expansion connector 17, and the expansion cover 13, as shown in FIG. 6 to FIG. 8. This expansion connector section 50 is provided in a middle area in a transverse direction of the device case 1 that is the main body of the terminal.

More specifically, in the second inclined surface 7b of the housing projection section 7, the expansion housing recess section 15 is obliquely provided in substantially parallel with the second inclined surface 7b, and the expansion cover 13 is attached thereto, as shown in FIG. 6 to FIG. 8. In the expansion housing recess section 15, the expansion board 16 is obliquely provided in substantially parallel with the second inclined surface 7b. In an inner bottom portion of the expansion housing recess section 15, the expansion connector 17 is obliquely provided in substantially parallel with the second inclined surface 7b. That is, this expansion connector 17 is inclined in the longitudinal direction of the device case 1.

The above-described expansion connector 17, into which a board connector 16a of the expansion board 16 is inserted to be electrically connected, is provided on a unit case 9a in the upper case 2 and electrically connected to the circuit board 6 in the upper case 2 by a connecting wire 17a, as shown in FIG. 3 and FIG. 6 to FIG. 8. Also, this expansion connector 17 is provided extending in the transverse direction perpendicular to the longitudinal direction of the device case 1, that is, a direction perpendicular to the inclining direction of the bottom part of the expansion housing recess section 15 while being exposed toward the inside of the expansion housing recess section 15, in an opening section in the bottom part of the expansion housing recess section 15.

The expansion board 16 is, for example, a card reading substrate (such as a non-contact IC (Integrated Circuit) reader writer board and a RFID (Radio Frequency Identifier) reader writer board) which reads information of a card such as a credit card in a non-contact manner, as shown in FIG. 3 and FIG. 6 to FIG. 8. This expansion board 16 includes the board connector 16a which is connected to the expansion connector 17, and the expansion connector 17 having the board connector 16a connected thereto is electrically connected to the circuit board 6 in the upper case 2 by the connecting wire 17a.

On the inner surface of the housing projection section 7 of the lower case 3, a magnetic electrode 16b which retrieves information of a card by a magnetic field (induced electromotive force) is provided, as shown in FIG. 3. This magnetic electrode 16b is electrically connected to the circuit board 6 in the upper case 2 and is also electrically connected to the expansion board 16 via the circuit board 6.

The expansion board 16 is structured to magnetically retrieve information signals of a card such as a credit card by the magnetic electrode 16b when this card is brought close to the outer surface of the housing projection section 7 of the lower case 3, and to read the retrieved magnetic information signals as information of the card.

This expansion board 16 is obliquely arranged in the expansion housing recess section 15 in the second inclined surface 7b of the housing projection section 7 of the lower case 3 in substantially parallel with the second inclined surface 7b, and is thereby inclined in the longitudinal direction of the device case 1, as shown in FIG. 3 and FIG. 6 to FIG. 8. As a result, this expansion board 16 is structured such that, even though its length in the longitudinal direction of the device case 1 is long, the longitudinal length of a space to be occupied thereby in the device case 1 is shorter because of its inclination with respect to the device case 1.

That is, as compared to a case where the expansion board 16 is arranged in parallel with the device case 1 in the longitudinal direction, the longitudinal length of a space to be occupied by the expansion board 16 in the device case 1 is shorter because of the inclination of the expansion board 16, as shown in FIG. 3 and FIG. 6 to FIG. 8. Thus, even though the length of the expansion board 16 in the longitudinal direction of the device case 1 is long, the longitudinal length of a space to be occupied by the expansion board 16 in the device case 1 can be kept short.

On the other hand, the expansion cover 13 covers the expansion housing recess section 15 in the second inclined surface 7b of the housing projection section 7 of the lower case 3 so as to protect the expansion board 16 in the expansion housing recess section 15, as shown in FIG. 3 and FIG. 6 to FIG. 9. This expansion cover 13 includes a cover main body 18 and a waterproof panel 19, and has a structure where the waterproof panel 19 has been attached to the inner surface of the cover main body 18 by a two-sided adhesive tape 20. As a result, this expansion cover 13 is structured such that, by the waterproof panel 19, waterproofing is achieved and the strength of the cover main body 18 is increased.

The above-described expansion cover 13 is arranged in the expansion housing recess section 15 in the second inclined surface 7b of the housing projection section 7 of the lower case 3 in substantially parallel with the second inclined surface 7b, and is thereby inclined in the longitudinal direction of the device case 1 as in the case of the expansion board 16, as shown in FIG. 3 and FIG. 6 to FIG. 9. As a result, the expansion cover 13 is structured such that, even though its length in the longitudinal direction of the device case 1 is long, the longitudinal length of a space to be occupied thereby in the device case 1 is short because of its inclination with respect to the device case 1.

That is, as compared to a case where the expansion cover 13 is arranged in parallel with the device case 1 in the longitudinal direction, the longitudinal length of a space to be occupied by the expansion cover 13 in the device case 1 is shorter because of the inclination of the expansion cover 13, as shown in FIG. 3 and FIG. 6 to FIG. 8. Thus, even though the length of the expansion cover 13 in the longitudinal direction of the device case 1 is long, the longitudinal length of a space to be occupied by the expansion cover 13 in the device case 1 can be kept short.

The cover main body 18 is formed in a plate shape whose outer peripheral size is substantially equal to the inner peripheral size of the expansion housing recess section 15, as shown in FIG. 6 to FIG. 9. On the sides of the cover main body 18 in the transverse direction of the device case 1, attachment projection sections 18a are provided projecting in sideward directions. In these attachment projection sections 18a, screw insertion holes 18b into which mounting screws 21 are inserted are provided in a direction substantially perpendicular to the longitudinal direction of the device case 1, and each of these screw insertion holes 18b includes a large-diameter hole portion into which a head section 21a of the corresponding mounting screw 21 is inserted and a small-diameter hole portion into which a screw section 21b of the mounting screw 21 is inserted.

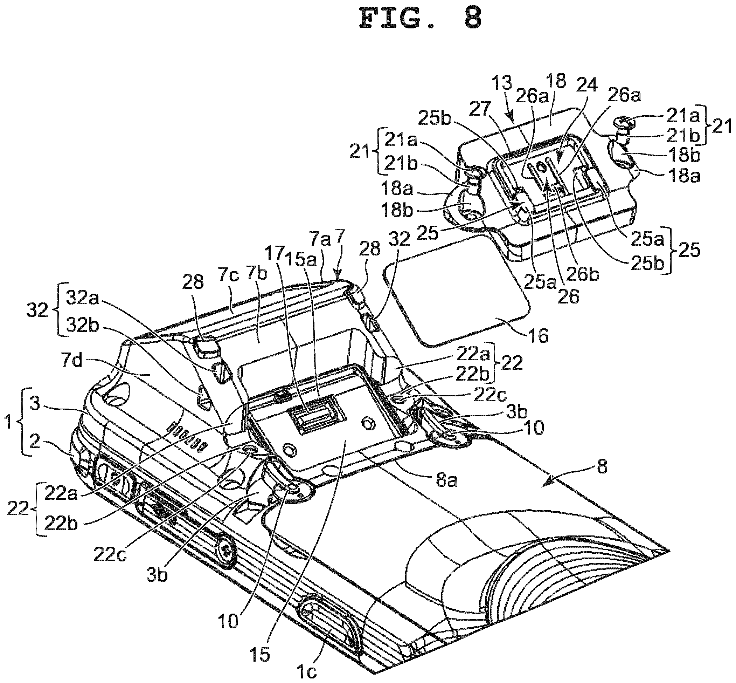

In side portions of the expansion housing recess section 15 in the transverse direction of the device case 1, that is, in side portions of the second inclined surface 7b of the housing projection section 7 in the transverse direction of the device case 1, cutout sections 22 are provided in which the attachment projection sections 18a of the cover main body 18 are arranged, as shown in FIG. 8. As a result, when the cover main body 18 is arranged in the expansion housing recess section 15 and the attachment projection sections 18a are arranged in the cutout sections 22, the expansion cover 13 is obliquely positioned on the device case 1 while being in substantially parallel with the second inclined surface 7b of the housing projection section 7.

More specifically, each cutout section 22 has a vertical surface 22a provided to be substantially perpendicular to the horizontal direction of the device case 1, and a horizontal surface 22b provided to be substantially parallel with the horizontal direction of the device case 1, as shown in FIG. 8. In the horizontal surfaces 22b of the cutout sections 22, screw holes 22c into which the screw sections 21b of the mounting screws 21 are screwed are provided to be substantially perpendicular to the horizontal surfaces 22b.

As a result, the expansion cover 13 is structured such that, when the cover main body 18 is arranged in the expansion housing recess section 15 and the attachment projection sections 18a are arranged in the cutout sections 22, the screw insertion holes 18b of the attachment projection sections 18a are positioned coaxially with the screw holes 22c of the cutout sections 22 provided in the second inclined surface 7b of the housing projection section 7, as shown in FIG. 6 to FIG. 9.

Accordingly, in a state where the attachment projection sections 18a have been arranged in the cutout sections 22 and the screw insertion holes 18b of the attachment projection sections 18a have been positioned coaxially corresponding to the screw holes 22c of the cutout sections 22 provided in the second inclined surface 7b of the housing projection section 7, when the mounting screws 21 are inserted into the screw insertion holes 18b of the attachment projection sections 18a while being substantially perpendicular to the longitudinal direction of the device case 1 and the screw sections 21b of the mounting screws 21 are screwed into the screw holes 22c of the cutout sections 22, the expansion cover 13 is attached to the expansion housing recess section 15, as shown in FIG. 6 to FIG. 9.

Also, the above-described pair of cutout sections 22 in the side portions of the second inclined surface 7b of the housing projection section 7 is structured such that side portions of the expansion board 16 can be easily held with fingertips of a hand when the expansion board 16 is arranged in or detached from the expansion housing recess section 15 after the expansion cover 13 is detached from the expansion housing recess section 15 of the housing projection section 7, as shown in FIG. 5 and FIG. 8.

More specifically, the pair of cutout sections 22 is structured such that, when the board connector 16a of the expansion board 16 is to be inserted into or extracted from the expansion connector 17 in the expansion housing recess section 15 with side portions of the expansion board 16 being held with fingers of a hand, the fingertips holding the side portions of the expansion board 16 are placed on the cutout sections 22, as shown in FIG. 6 to FIG. 8.

That is, the pair of cutout sections 22 is structured such that fingertips holding side portions of the expansion board 16 can be placed on side portions of the outer surface of the device case 1 in the transverse direction and in the expansion housing recess section 15, and therefore are not obstructed by side portions of the outer surface of the device case 1 in the transverse direction, as shown in FIG. 6 to FIG. 8.

The cover main body 18 has a cover packing hold-down section 18c provided on the outer peripheral portion of its inner surface in a frame shape, as shown in FIG. 6 to FIG. 9. This cover packing hold-down section 18c is structured to hold down a cover packing 23 arranged along the inner periphery of the expansion housing recess section 15 provided in the second inclined surface 7b of the housing projection section 7. In the inner peripheral portion of the bottom part of the expansion housing recess section 15, a cover mounting groove 15b in which the cover packing 23 is mounted is provided along the entire periphery. The cover packing 23 is arranged in this cover mounting groove 15b with it being upwardly exposed.

As a result, the cover main body 18 is structured such that, when it is attached to the expansion housing recess section 15 by the mounting screws 21, the cover packing hold-down section 18c holds down the cover packing 23 mounted in the cover mounting groove 15b provided in the inner peripheral portion of the bottom part of the expansion housing recess section 15, whereby waterproofing for the expansion housing recess section 15 is achieved, as shown in FIG. 6 to FIG. 9.

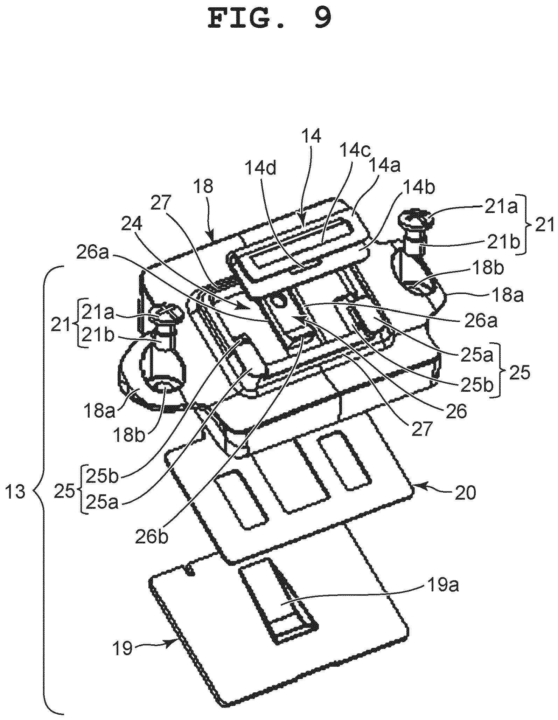

Also, the cover main body 18 is provided with a fitting attachment section 24 to which the first belt attachment fitting 14 is slidably attached, as shown in FIG. 5 and FIG. 9. The first belt attachment fitting 14 is a fitting acquired by a metal plate being bent in a U-shape. In an upper surface plate 14a of this first belt attachment fitting 14, a second belt attachment hole 14c is provided into which the one end portion 12a of the hand belt 12 is inserted to be attached. In a middle area on a lower surface plate 14b of this first belt attachment fitting 14, a fitting lock hole 14d is provided.

The fitting attachment section 24 includes a pair of first hold-down sections 25 which slidably holds down side portions of the first belt attachment fitting 14 and a second hold-down section 26 which resiliently holds a middle portion of the first belt attachment fitting 14, as shown in FIG. 5, FIG. 8 and FIG. 9. The pair of first hold-down sections 25 holds down the sides of the lower surface plate 14b of the first belt attachment fitting 14 against the outer surface of the cover main body 18. This pair of first hold-down sections 25 is provided in a sliding area on the cover main body 18 in which the first belt attachment fitting 14 is slid in the longitudinal direction of device case 1, that is, the inclination direction of the second inclined surface 7b of the housing projection section 7.

More specifically, the pair of first hold-down sections 25 includes a pair of projection sections 25a which is provided to upwardly project on side portions of the cover main body 18 in the transverse direction of the device case 1 and holds down the sides of the lower surface plate 14b, and a pair of hold-down grooves 25b which is provided under the pair of projection sections 25a and corresponds to the sides of the lower surface plate 14b of the first belt attachment fitting 14, as shown in FIG. 5, FIG. 8 and FIG. 9. The pair of hold-down grooves 25b is provided penetrating through the front and back surfaces of the cover main body 18 in the thickness direction, and upper end portions of the pair of projection sections 25a are formed to be positioned above these hold-down grooves 25b.

The second hold-down section 26 is provided in a middle area on the cover main body 18 along the inclination of the second inclined surface 7b of the housing projection section 7 in a manner to form a tongue-like shape, as shown in FIG. 5, FIG. 8 and FIG. 9. More specifically, this second hold-down section 26 is structured to be flexurally deformed in the thickness direction of the cover main body 18, that is, the vertical direction by a slit hole 26a being provided under its body excluding one end portion serving as its base portion. On the other end portion of the second hold-down section 26, an engaging projection 26b is provided which disengageably engages with the fitting lock hole 14d in the lower surface plate 14b of the first belt attachment fitting 14.

On the other hand, the first belt attachment fitting 14 is structured such that, when the lower surface plate 14b is arranged on the outer surface of the cover main body 18 and slid toward the base portion side of the second inclined surface 7b of the housing projection section 7, side portions of the lower surface plate 14b are inserted into areas under the pair of first hold-down sections 25, and a middle portion of the lower surface plate 14b downwardly presses the engaging projection 26b of the second hold-down section 26 and thereby flexurally deforms the second hold-down section 26, as shown in FIG. 5, FIG. 8 and FIG. 9.

Also, the first belt attachment fitting 14 is structured such that, when the lower surface plate 14b is slid on the outer surface of the cover main body 18 and the side portions of the lower surface plate 14b are inserted into the areas under the pair of first hold-down sections 25, these side portions are pressed against the cover main body 18 at positions corresponding to the hold-down grooves 25b of the pair of first hold-down sections 25, as shown in FIG. 5, FIG. 8 and FIG. 9.

Moreover, the first belt attachment fitting 14 is structured such that, when the side portions of the lower surface plate 14b are pressed against the cover main body 18, the second hold-down section 26 flexurally deformed by the middle portion of the lower surface plate 14b resiliently returns to its original position and the engaging projection 26b of the second hold-down section 26 engages with the fitting lock hole 14d of the lower surface plate 14b, whereby the first belt attachment fitting 14 is attached to the cover main body 18, as shown in FIG. 5, FIG. 8 and FIG. 9.

Also, on the outer surface of the cover main body 18, a cover protection section 27 which reinforces the cover main body 18 is provided projecting in a frame shape, as shown in FIG. 5 to FIG. 9. More specifically, the cover protection section 27 is provided to surround the fitting attachment section 24 along the outer periphery of the sliding area of the first belt attachment fitting 14. As a result, this cover protection section 27 is structured to reinforce the strength of a thin portion of the cover main body 18, that is, the strength of the fitting attachment section 24.

That is, in the case where the expansion housing recess section 15 formed in the device case 1 is large as shown in FIG. 5 to FIG. 9, the cover main body 18 is also large. As a result, the strength of the entire cover main body 18 is decreased. Accordingly, the thickness of the cover main body 18 is required to be increased. However, this cover main body 18 has the structure where the surrounding area of the fitting attachment section 24 has been reinforced by the cover protection section 27. Therefore, the strength of the cover main body 18 is ensured by the cover protection section 27 even though it is thin.

Also, in the case of this cover main body 18, the cover protection section 27 is formed in a manner to be located on its outer surface and project in a frame shape, as shown in FIG. 5 to FIG. 9. Accordingly, even though the cover protection section 27 is provided, this cover protection section 27 does not project into the expansion housing recess section 15. As a result, the inner space of the expansion housing recess section 15 is not constrained by the cover protection section 27, whereby the internal volume thereof is ensured and high density storage can be achieved.

On the other hand, the waterproof panel 19 is to achieve waterproofing for the cover main body 18, and is attached to the inner surface of the cover main body 18, or in other words, the undersurface of the cover main body 18 with the two-sided adhesive tape 20, as shown in FIG. 9. As a result, even though the hold-down grooves 25b of the pair of first hold-down sections 25 in the cover main body 18 and the slit hole 26a of the second hold-down section 26 penetrate through the front and back surfaces of the cover main body 18, waterproofing for the expansion cover 13 is achieved and the strength of the cover main body 18 is increased by the hold-down grooves 25b of the pair of first hold-down sections 25 and the slit hole 26a of the second hold-down section 26 being closed by the waterproof panel 19.

Also, the waterproof panel 19 is provided with a clearance recess section 19a which allows the flexural deformation of the second hold-down section 26 of the fitting attachment section 24, as shown in FIG. 6, FIG. 7 and FIG. 9. This clearance recess section 19a has a shape conformed to the flexural deformation of the second hold-down section 26, and is obliquely provided in the waterproof panel 19 such that its portion on the leading end side of the second hold-down section 26 is deeply positioned and its portion on the base side of the second hold-down section 26 is shallowly positioned. That is, the clearance recess section 19a is provided to be inclined and project below the waterproof panel 19.

Also, on the housing projection section 7 to which the expansion cover 13 is attached, leg sections 28 for supporting the device case 1 are provided, as shown in FIG. 5, FIG. 11 and FIG. 12. These leg sections 28 are arranged on the sides of the top part of the second inclined surface 7b of the housing projection section 7 in the transverse direction of the device case 1. As a result, when the lower case 3 is arranged on the placement surface of a table or the like, the device case 1 is supported at three points, that is, the leg sections 28 provided on the sides of the housing projection section 7, and a portion of the lower case 3 on the other end portion 1b side of the device case 1.

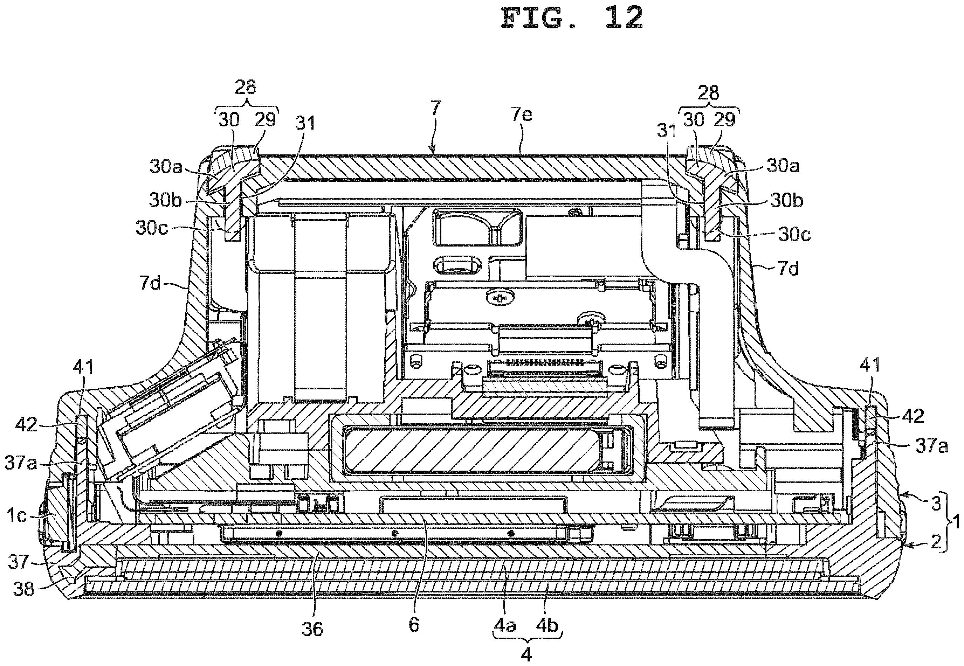

Each edge potion on the sides of the second inclined surface 7b of the housing projection section 7 in the transverse direction of the device case 1 is formed by an arc-shaped curved surface 7f, as shown in FIG. 5. The above-described leg sections 28 are provided on these curved surfaces 7f of the edge portions on the sides of the second inclined surface 7b. Side surfaces 7d of the housing projection section 7 in the transverse direction of the device case 1 are curved at their portions connected to the second inclined surface 7b, and each leg section 28 project from three surfaces : the second inclined surface 7b of the housing projection section 7, one of the side surfaces 7d of the housing projection section 7 in the transverse direction of the device case 1, and a convex surface 7e on the top side of the second inclined surface 7b, as shown in FIG. 12.

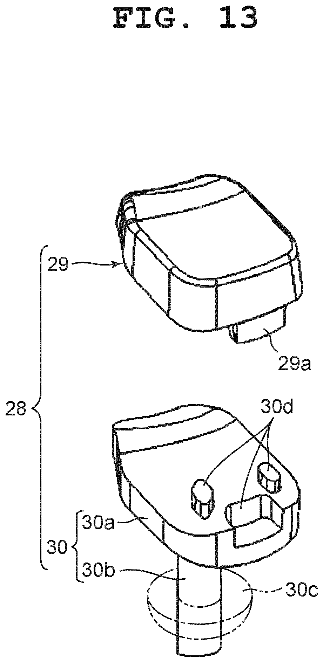

Each of the above-described leg sections 28 includes a flexible member 29 which is made of elastomer or rubber and has elasticity, and a rigid member 30 which is made of a material harder than that of the flexible member 29 and fixed to the housing projection section 7 of the lower case 3, as shown in FIG. 13. The flexible member 29 is an anti-slip member that prevents the portable terminal from slipping when it is arranged on the placement surface of a table or the like, as shown in FIG. 5. This flexible member 29 is structured to protrude from the three surfaces, that is, the second inclined surface 7b of the housing projection section 7, one of the side surfaces 7d of the housing projection section 7 in the transverse direction of the device case 1, and the convex surface 7e on the top side of the second inclined surface 7b.

The rigid member 30 includes a mounting section 30a on which the flexible member 29 is mounted, and a fixing shaft 30b which is provided on the undersurface of the mounting section 30a and inserted into and fixed in a leg attachment hole 31 provided in the housing projection section 7, as shown in FIG. 13. The mounting section 30a herein is provided inclining with respect to the fixing shaft 30b.

More specifically, this mounting section 30a is structured to be arranged inclining in two directions, or more specifically, in the inclination direction of the second inclined surface 7b and the direction toward the corresponding side surface 7d of the housing projection section 7 by being arranged on the above-described three surfaces, that is, the second inclined surface 7b of the housing projection section 7, the corresponding side surface 7d of the housing projection section 7 in the transverse direction of the device case 1, and the convex surface 7e on the top side of the second inclined surface 7b, as shown in FIG. 5, FIG. 11 and FIG. 12.

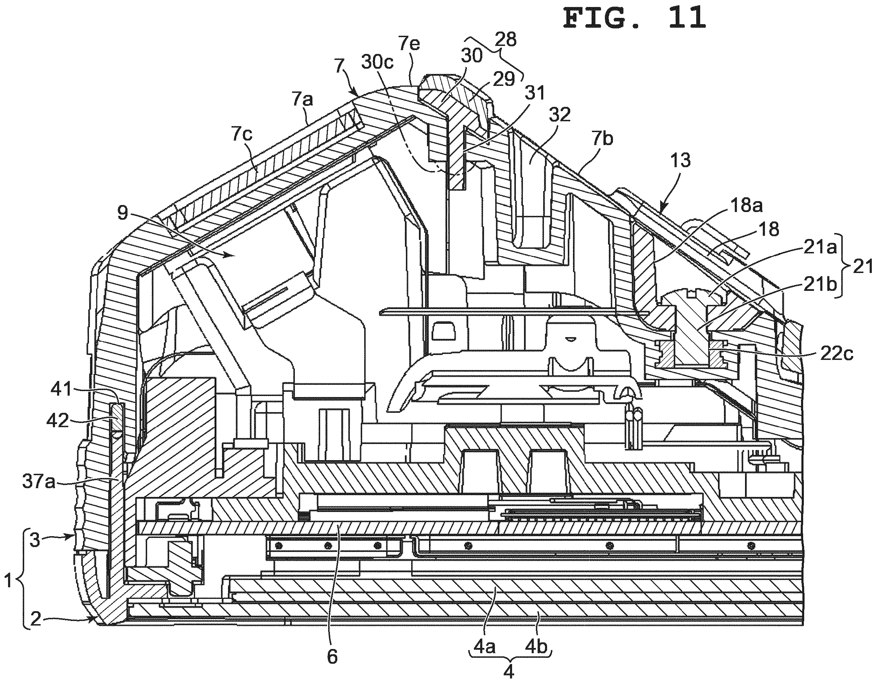

The fixing shaft 30b is arranged to be substantially perpendicular to the upper surface of the upper case 2, as shown in FIG. 5 and FIG. 11 to FIG. 13. This fixing shaft 30b has a welding section 30c provided on a portion that is inserted into the corresponding leg attachment hole 31 of the housing projection section 7 and protrudes from this leg attachment hole 31 into the inside of the housing projection section 7. By the welding section 30c which has protruded into the inside of the housing projection section 7 from the leg attachment hole 31 being welded, this fixing shaft 30b is fixed to the housing projection section 7, as shown in FIG. 11 and FIG. 12 with two-dot dashed lines.

Also, the attachment surface of the flexible member 29 and that of the mounting section 30a of the rigid member 30 are provided with projection and recess sections 29a and 30d, respectively, by which the flexible member 29 and the mounting section 30a of the rigid member 30 are fitted into each other, as shown in FIG. 11 and FIG. 12. The flexible member 29 is integrally formed with the mounting section 30a of the rigid member 30 by insertion molding. In this embodiment, when the flexible member 29 is provided on the mounting section 30a of the rigid member 30 by insertion molding, the projection and recess sections 29a and 30d are fitted into each other and thereby firmly fixed to each other.

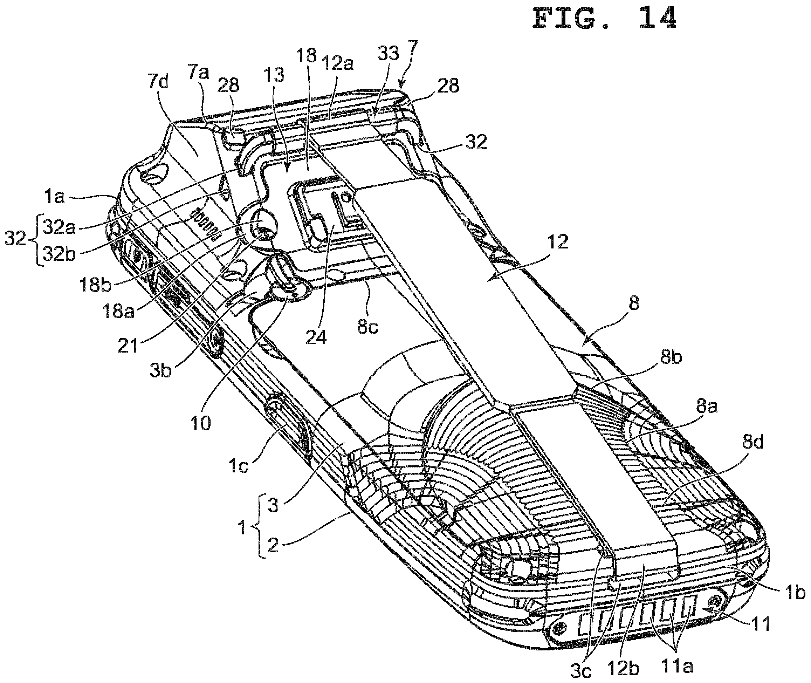

On the other hand, in the housing projection section 7 of the lower case 3, a pair of third belt attachment holes 32 for attaching a predetermined component such as a hand belt or a strap (not shown) is provided, as shown in FIG. 14 to FIG. 16. This pair of third belt attachment holes 32 is formed in both sides of the second inclined surface 7b of the housing projection section 7 in the transverse direction perpendicular to the longitudinal direction of the device case 1, and each third belt attachment hole 32 penetrates through two surfaces, or more specifically, the corresponding side surface 7d of the housing projection section 7 in the transverse direction of the device case 1 and the second inclined surface 7b.

That is, each third belt attachment hole 32 forms a first attachment hole 32a that is open to the second inclined surface 7b side and a second attachment hole 32b that is open to the corresponding side surface 7d side of the housing projection section 7 in the transverse direction of the device case 1, and is structured such that the inner portion of the first attachment hole 32a and the inner portion of the second attachment hole 32b are communicated with each other, as shown in FIG. 14 to FIG. 16.

This pair of third belt attachment holes 32 is provided as strap holes for attaching a strap (not shown) and also as holes for attaching the hand belt 12, as shown in FIG. 14. More specifically, this pair of third belt attachment holes 32 is structured such that a second belt attachment fitting 33 for attaching the hand belt 12 is detachably attached thereto.

The second belt attachment fitting 33 includes a fitting main body 34 to which the hand belt 12 is attached, and a pair of fitting mounting sections 35 provided on both ends of the fitting main body 34 in a bent state, as shown in FIG. 14 to FIG. 16. The fitting main body 34 is formed in a square bar shape and structured to have a cover section 34a provided on its outer peripheral surface. The length of this fitting main body 34 is substantially the same as the length between the third belt attachment holes 32.

The pair of fitting mounting sections 35 is structured to be inserted from above into and detachably attached to the first attachment holes 32a of the pair of third belt attachment holes 32 provided on both sides of the second inclined surface 7b of the housing projection section 7 in the transverse direction perpendicular to the longitudinal direction of the device case 1, as shown in FIG. 14 to FIG. 16.

More specifically, each of the pair of fitting mounting sections 35 has a slit groove 35a provided in its middle portion in the transverse direction of the device case 1 in a manner to upwardly penetrate from the lower end in the longitudinal direction of the device case 1, as shown in FIG. 14 to FIG. 16. As a result, the pair of fitting mounting sections 35 is structured to be flexurally deformed in the transverse directions of the device case 1 by the presence of the slit grooves 35a when being inserted into the first attachment holes 32a of the pair of third belt attachment holes 32 from the second inclined surface 7b side of the housing projection section 7.

In addition, on the outer surfaces of the pair of fitting mounting section 35 in the transverse direction of the device case 1, engaging projections 35b are provided which disengageably engage with inner portions of the second attachment holes 32b of the pair of third belt attachment holes 32 penetrating through the side surfaces 7d of the housing projection section 7 located in the transverse direction of the device case 1, as shown in FIG. 14 to FIG. 16.

That is, the pair of fitting mounting sections 35 is structured such that they resiliently return in directions away from each other after being inserted into the first attachment holes 32a of the pair of third belt attachment holes 32 from the second inclined surface 7b side of the housing projection section 7 and flexurally deformed, whereby the engaging projections 35b engage with the inner portions of the second attachment holes 32b of the pair of third belt attachment holes 32, as shown in FIG. 14 to FIG. 16.

Also, the pair of fitting mounting sections 35 is structured such that, in order to release the engagement of the engaging projections 35b with the inner portions of the second attachment holes 32b of the pair of third belt attachment holes 32, a tool is inserted into each second attachment hole 32b from the corresponding side surface 7d side of the housing projection section 7 in the transverse direction of the device case 1, and presses each engaging projection 35b so as to flexurally deform the corresponding fitting mounting section 35, whereby the engaging projections 35b are separated from the second attachment holes 32b, and the fitting mounting sections 35 are detached from the third belt attachment holes 32, as shown in FIG. 14 to FIG. 16.

On the other hand, each of the pair of third belt attachment holes 32 is structured such that the string of a strap not shown is inserted from one of its first attachment hole 32a and second attachment hole 32b into the other hole. As a result, a strap can be attached to either one of the pair of third belt attachment holes 32.

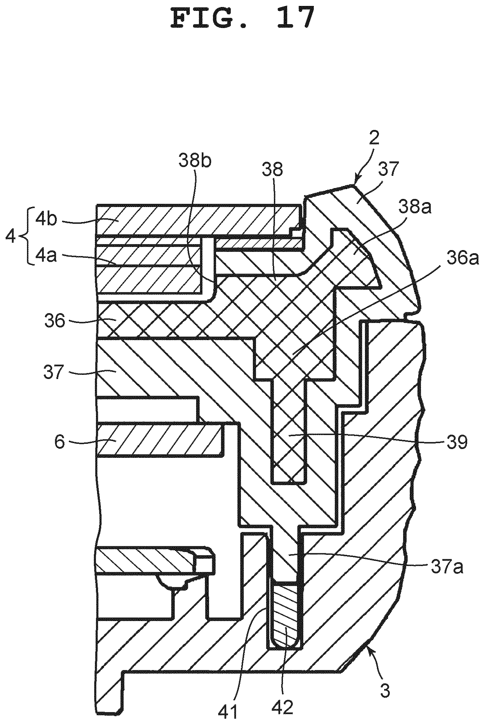

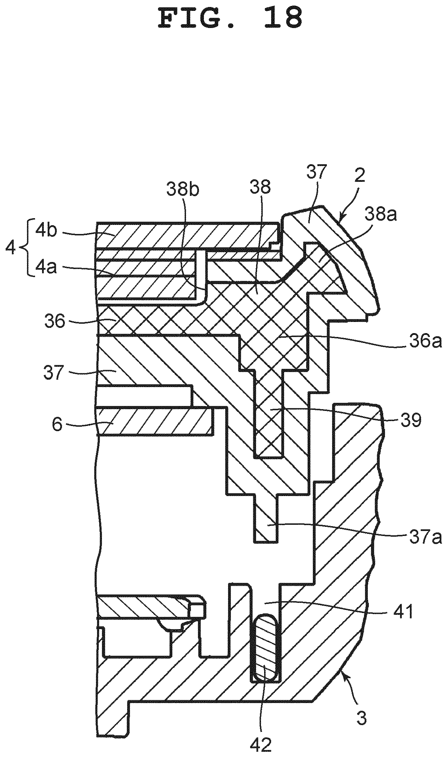

The upper case 2 of the device case 1 includes a case main body section 36 which is a reinforcement member made of a highly rigid material, and an outer peripheral cover section 37 which is made of synthetic resin and is provided covering the outer peripheral edges and undersurface of the case main body section 36, as shown in FIG. 17 and FIG. 18. The case main body section 36 has a plate-like shape and the above-described highly rigid material therefor is, for example, a metal such as magnesium alloy, stainless steel, and aluminum alloy, reinforced plastic, or a material acquired by carbon fibers or glass fibers being woven and solidified.

This case main body section 36 includes a first reinforcement section 38 which is a second extending section thicker than other portions and extends from the outer peripheral edge portion of the case main body section 36, a second reinforcement section 39 which is a first extending section provided in a frame shape along the outer periphery of the case main body section 36 and projects from the undersurface of the first reinforcement section 38, and a uniting section 36a which unites the first reinforcement section 38 with the second reinforcement section 39, as shown in FIG. 17 and FIG. 18. This uniting section 36a is formed to be thicker than the first reinforcement section 38. On the other hand, the outer peripheral cover section 37 is provided covering the outer peripheral portion and undersurface of the case main body section 36, or in other words, the first reinforcement section 38, the second reinforcement section 39, the uniting section 36a, and the undersurface of the case main body section 36.

The first reinforcement section 38 and the second reinforcement section 39 are formed such that their cross sections have a T-shape, as shown in FIG. 17 and FIG. 18. As a result, the first reinforcement section 38 and the second reinforcement section 39 are structured such that their rigidities are increased, their strengths are ensured, and their high pressing forces are maintained against the elasticity of a waterproof packing 42 described later, whereby high waterproofness can be ensured.

On the outer peripheral edge portion of the first reinforcement section 38, or in other words, on the outer peripheral edge portion of the uniting section 36a, a protection projection section 38a having a chevron shape is provided projecting upward, as shown in FIG. 17 and FIG. 18. This protection projection section 38a protects the outer peripheral portion of the input display section 4 arranged on the case main body section 36. Also, the first reinforcement section 38 is structured such that the undersurface of this protection projection section 38a is arranged corresponding to the outer peripheral edge portion of the lower case 3. This first reinforcement section 38 has a stepped section 38b which is provided at the boundary between this first reinforcement section 38 and the case main body section 36 and exposed without being covered by the outer peripheral cover section 37.

The outer peripheral cover section 37 is structured such that, when the upper case 2 is superposed on and attached to the lower case 3, the outer peripheral surface of the outer peripheral cover section 37 comes in close contact with and arranged on the upper surface of the outer peripheral edge portion of the lower case 3 and the inner peripheral surface thereof, as shown in FIG. 17 and FIG. 18. On this outer peripheral cover section 37, a packing hold-down rib 37a which is a packing hold-down section corresponding to the second reinforcement section 39 is provided in a frame shape and projects toward the lower case 3 side.

On the other hand, in the lower case 3, a case packing groove 41 is provided along the inner peripheral surface thereof, as shown in FIG. 17 and FIG. 18. In this case packing groove 41, the waterproof packing 42 is arranged. As a result, the device case 1 is structured such that, when the upper case 2 is superposed on and attached to the lower case 3, the packing hold-down rib 37a of the outer peripheral cover section 37 is pressed into the case packing groove 41 of the lower case 3 by the second reinforcement section 39 and thereby holds down the waterproof packing 42.

That is, this device case 1 is structured such that, when the upper case 2 is superposed on and pressed against the lower case 3, the second reinforcement section 39 provided on the case main body section 36 of the upper case 2 presses down the packing hold-down rib 37a of the outer peripheral cover section 37 into the case packing groove 41 of the lower case 3, and the pressed packing hold-down rib 37a holds down the waterproof packing 42 in the case packing groove 41 of the lower case 3, as shown in FIG. 17 and FIG. 18.

In addition, this device case 1 is structured such that, when the waterproof packing 42 in the case packing groove 41 is held down by the packing hold-down rib 37a, the outer peripheral surface of the outer peripheral cover section 37 comes in close contact with and arranged on the upper surface of the outer peripheral edge portion of the lower case 3 and the inner peripheral surface thereof, as shown in FIG. 17 and FIG. 18.

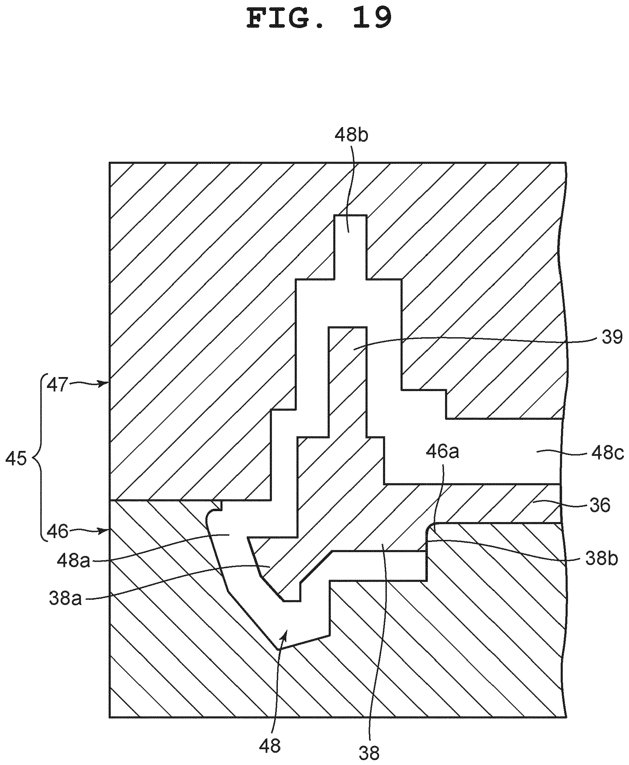

Next, the manufacture of the upper case 2 of the above-described portable terminal is described with reference to FIG. 19.

This method for manufacturing the upper case 2 includes a first step of forming the case main body section 36 that is a reinforcement member by use of a highly rigid material, a second step of fixing the case main body section 36 in a molding die 45, and a third step of injecting resin into the molding die 45 so as to form the outer peripheral cover section 37 on the case main body section 36.

At the first step, the case main body section 36 having a substantially plate-like shape is formed with a highly rigid material. This material is, for example, a metal such as magnesium alloy, stainless steel, and aluminum alloy, reinforced plastic, or a material acquired by carbon fibers or glass fibers being woven and solidified. In addition, on the outer peripheral portion of the case main body section 36, the thick first reinforcement section 38 which extends from the outer peripheral portion of the case main body section 36 and the second reinforcement section 39 which is positioned on the first reinforcement section 38 are formed.

In this embodiment, on the outer peripheral edge portion of the first reinforcement section 38, the protection projection section 38a which has a chevron shape and protects the outer peripheral portion of the input display section 4 is provided projecting upward (downward in FIG.19). Also, at the boundary between the first reinforcement section 38 and the case main body section 36, the stepped section 38b is formed to be higher (lower in FIG.19) than the upper (lower in FIG.19) surface of the case main body section 36.

At the second step, the case main body section 36 is arranged in the molding die 45. This molding die 45 includes a lower die 46 and an upper die 47. When being arranged in this molding die 45, the case main body section 36 is placed inside the lower die 46 and the upper die 47. Here, an engagement projection section 46a which is a portion of the lower die 46 is brought into contact with the stepped section 38b of the first reinforcement section 38 located at the boundary with the case main body section 36, and the outer peripheral surface of the engagement projection section 46a is pressed against the inner peripheral surface of the stepped section 38b. As a result, the case main body section 36 is positionally restricted with respect to the lower die 46 and fixed in the molding die 45.

In this state, a molding space (cavity) 48 for the outer peripheral cover section 37 has been formed in the molding die 45. This molding space 48 includes a first space 48a surrounding the outer peripheral portions of the first reinforcement section 38 and the second reinforcement section 39, a groove-shaped second space 48b located below (above in FIG.19) the second reinforcement section 39 on the same axis, and a third space corresponding to the lower side (upper side in FIG.19) of the case main body section 36.

At the third step, resin is injected into the molding space 48 of the molding die 45 and hardened. As a result, the outer peripheral cover section 37 is integrally formed on the outer peripheral portions of the first reinforcement section 38 and second reinforcement section 39 of the case main body section 36 by use of the first space 48a of the molding space 48. In addition, the packing hold-down rib 37a of the outer peripheral cover section 37 is formed under and corresponding to the second reinforcement section 39 by use of the second space 48b of the molding space 48. Moreover, the outer peripheral cover section 37 is formed under the case main body section 36 by use of the third space 48c of the molding space 48.

Then, the lower die 46 and upper die 47 of the molding die 45 are detached from each other, whereby the upper case 2 that is a molded article is taken out from the molding die 45. In this state, the stepped section 38b of the first reinforcement section 38 located at the boundary with the case main body section 36 has been exposed without being covered by the outer peripheral cover section 37. As a result of the above-described steps, the upper case 2 having the outer peripheral cover section 37 provided on the outer peripheral portion of the case main body section 36 is acquired.

Next, a case is described in which the upper case 2 manufactured as described above is superposed on the lower case 3 so as to assemble the device case 1.

In this case, first, the waterproof packing 42 is arranged in the case packing groove 41 of the lower case 3 provided along the inner peripheral surface of the lower case 3, as shown in FIG. 17 and FIG. 18. Then, the upper case 2 is superposed on the lower case 3 such that the packing hold-down rib 37a of the outer peripheral cover section 37 of the upper case 2 corresponds to the case packing groove 41 of the lower case 3.

In this state, the lower case 3 is pressed against the upper case 2. As a result, the packing hold-down rib 37a of the outer peripheral cover section 37 of the upper case 2 is pressed into the case packing groove 41 of the lower case 3 by the second reinforcement section 39 of the upper case 2. This pressed packing hold-down rib 37a presses the waterproof packing 42 in the case packing groove 41. As a result, waterproofing for the upper case 2 and the lower case 3 is achieved. Here, the outer peripheral surface of the outer peripheral cover section 37 comes in close contact with and is arranged on the upper surface and inner peripheral surface of the outer peripheral edge portion of the lower case 3. As a result, the assembly of the device case 1 is completed.

Before the assembly of the device case 1, various types of components are mounted on the upper case 2 in advance. More specifically, the input display section 4 and the key input section 5 are mounted on the front surface of the upper case 2. Here, the input display section 4 having the transparent touch panel 4b laminated on the display panel 4a in advance is mounted on the upper case 2. In addition, the key input section 5 having the plurality of key buttons 5a arranged on the switch board 5b is mounted on the upper case 2.

Also, on the upper case 2, the circuit board 6 is mounted corresponding to the input display section 4, and also the unit case 9a of the optical reading section 9 is mounted. Here, the scanner section 9b including the laser reading section and the camera section and the expansion connector 17 are attached to the unit case 9a in advance. In addition, the connection electrode section 11 is mounted on the end portion of the upper case 2 on the other end portion 1b side of the device case 1 in the longitudinal direction.

Moreover, on the side surface of the upper case 2, the side surface trigger key 1c is mounted. In this state, the input display section 4, the switch board 5b of and the key input section 5, the scanner section 9b, the expansion connector 17, the connection electrode section 11, and the side surface trigger key 1c are electrically connected to the circuit board 6. As a result, the various types of components are mounted on the upper case 2.

On the other hand, on the lower case 3 as well, various types of components are mounted. More specifically, the optical window section 7c is attached to the first inclined surface 7a of the housing projection section 7. In this state, the upper case 2 is superposed on the lower case 3 as described above so as to assemble the device case 1. As a result, the scanner section 9b of the unit case 9a of the optical reading section 9 provided in the upper case 2 corresponds to the optical window section 7c provided on the first inclined surface 7a of the housing projection section 7 of the lower case 3.

Also, here, the expansion connector 17 provided on the unit case 9a is inserted into the opening section 15a of the bottom portion of the expansion housing recess section 15 in the second inclined surface 7b of the housing projection section 7, and exposed in the expansion housing recess section 15. Here, the bottom portion of the expansion housing recess section 15 is obliquely arranged in substantially parallel with the second inclined surface 7b of the housing projection section 7. Also, the expansion connector 17 exposed in the expansion housing recess section 15 is obliquely arranged in substantially parallel with the second inclined surface 7b of the housing projection section 7 and inclined with respect to the longitudinal direction of the device case 1.

In this state, the expansion board 16 is arranged in the expansion housing recess section 15. Here, the board connector 16a provided on the undersurface of the expansion board 16 is inserted into the expansion connector 17 exposed in the expansion housing recess section 15 so that the expansion board 16 is electrically connected and attached to the expansion connector 17. As a result, the expansion board 16 is obliquely arranged in the expansion housing recess section 15 in substantially parallel with the second inclined surface 7b of the housing projection section 7.

Here, by the inclination of the expansion board 16 with respect to the device case 1, the longitudinal length of a space occupied by the expansion board 16 in the device case 1 is short. That is, in the case where the expansion board 16 is obliquely arranged with respect to the device case 1 in the longitudinal direction, the longitudinal length of a space to be occupied by the expansion board 16 in the device case 1 is shorter because of the inclination of the expansion board 16, as compared to a case where the expansion board 16 is arranged in parallel with the device case 1 in the longitudinal direction. Therefore, even though the length of the expansion board 16 in the longitudinal direction of the device case 1 is long, the longitudinal length of a space to be occupied by the expansion board 16 in the device case 1 can be kept short.

In addition, the expansion connector 17 is arranged in the expansion housing recess section 15 in manner to be long in the transverse direction of the device case 1. As a result, when the board connector 16a of the expansion board 16 is to be inserted into the expansion connector 17 with side portions of the expansion board 16 in the transverse direction of the device case 1 being held by fingertips, the expansion board 16 can be easily tilted in the transverse direction of the device case 1, whereby the board connector 16a of the expansion board 16 can be easily and favorably inserted into the expansion connector 17.

Moreover, when the board connector 16a of the expansion board 16 is to be inserted into the expansion connector 17 with the side portions of the expansion board 16 in the transverse direction of the device case 1 being held by the fingertips, the fingertips holding the side portions of the expansion board 16 can be placed on the cutout sections 22 provided in the side portions of the second inclined surface 7b of the housing projection section 7 in the transverse direction of the device case 1. By this structure as well, the board connector 16a of the expansion board 16 can be easily and favorably inserted into the expansion connector 17.

Then, the expansion cover 13 is attached to the expansion housing recess section 15 so as to protect the expansion board 16. Here, the expansion cover 13 is assembled in advance. In this assembly, the waterproof panel 19 is attached to the inner surface of the cover main body 18 of the expansion cover 13 with the two-sided adhesive tape 20, whereby the expansion cover 13 is assembled in which waterproofing has been achieved by the waterproof panel 19 and the strength of the cover main body 18 has been enhanced.

When this expansion cover 13 is to be attached to the expansion housing recess section 15, first, the cover packing 23 is mounted in the cover mounting groove 15b provided in the inner peripheral surface of the expansion housing recess section 15, and then the expansion cover 13 is attached to the expansion housing recess section 15 in this state. Here, the cover packing hold-down section 18c of the expansion cover 13 holds down the cover packing 23 mounted in the cover mounting groove 15b of the expansion housing recess section 15, whereby waterproofing for the expansion cover 13 and the expansion housing recess section 15 is achieved.

In this attachment, the attachment projection sections 18a provided projecting on the sides of the cover main body 18 in the transverse directions of the device case 1 are arranged in the cutout sections 22 provided in the side portions of the second inclined surface 7b of the housing projection section 7 in the transverse direction of the device case 1. Here, the attachment projection sections 18a of the expansion cover 13 are arranged on the horizontal surfaces 22b of the cutout sections 22 and also come in contact with the vertical surfaces 22a of the cutout sections 22. As a result, the expansion cover 13 is accurately and favorably attached to the expansion housing recess section 15.

In this state, each screw insertion hole 18b provided in the attachment projection sections 18a is positioned on the same axis as the screw hole 22c provided in the horizontal surface 22b of the corresponding cutout section 22. Accordingly, the mounting screws 21 are inserted into the screw insertion holes 18b of the attachment projection sections 18a while being substantially perpendicular to the longitudinal direction of the device case 1, and the screw sections 21b of the mounting screws 21 are tightly screwed into the screw holes 22c of the cutout sections 22.

As a result, the cover packing hold-down section 18c of the expansion cover 13 holds down the cover packing 23 mounted in the cover mounting groove 15b of the expansion housing recess section 15, and the expansion cover 13 is attached to the expansion housing recess section 15 with the cover main body 18 covering the expansion housing recess section 15. When being attached to the expansion housing recess section 15, the expansion cover 13 is arranged in the expansion housing recess section 15 in substantially parallel with the second inclined surface 7b of the housing projection section 7. Accordingly, as in the case of the expansion board 16, the longitudinal length of a space to be occupied by the expansion cover 13 in the device case 1 can be kept short because of its inclination with respect to the device case 1.

That is, in the case where the expansion cover 13 is obliquely arranged with respect to the device case 1 in the longitudinal direction, the longitudinal length of a space to be occupied by the expansion cover 13 in the device case 1 is shorter because of the inclination of the expansion cover 13, as compared to a case where the expansion cover 13 is arranged in parallel with the device case 1 in the longitudinal direction. Therefore, even though the length of the expansion cover 13 in the longitudinal direction of the device case 1 is long, the longitudinal length of a space to be occupied by the expansion cover 13 in the device case 1 can be kept short.

Then, the battery pack B is housed in the battery housing section 3a in the lower case 3, and the battery cover 8 is attached to this battery housing section 3a. Here, the other end portion 8d of the battery cover 8 is placed to be caught on an edge portion of the battery housing section 3a on the other end portion 1b side of the device case 1, and the one end portion 8c of the battery cover 8 is arranged on an edge portion of the battery housing section 3a on the housing projection section 7 side. Then, in this state, the one end portion 8c of the battery cover 8 is locked by the locking levers 10.

Here, when the one end portion 8c of the battery cover 8 is to be locked by the locking levers 10, the lever sections 10b of the locking levers 10 are operated in the lever housing recess sections 3b of the lower case 3 so as to rotate each locking section 10a in one direction, with the battery cover 8 being arranged on the lower case 3 and covering the battery housing section 3a of the lower case 3. By this operation, the locking sections 10a hold down the one end portion 8c of the battery cover 8 on the edge portion of the battery housing section 3a, whereby the one end portion 8c is locked and the assembly of the portable terminal is completed.

Next, the use of this portable terminal is described.

In this case, the hand belt 12 is attached to the portable terminal in advance. Here, first, the first belt attachment fitting 14 is attached to the expansion cover 13. That is, the lower surface plate 14b of the first belt attachment fitting 14 is arranged on the outer surface of the cover main body 18 and slid toward the base side of the second inclined surface 7b of the housing projection section 7.

As a result, the side portions of the lower surface plate 14b of the first belt attachment fitting 14 are inserted toward the areas under the pair of first hold-down sections 25 on the sides of the fitting attachment section 24 provided in the expansion cover 13, and the middle portion of the lower surface plate 14b of the first belt attachment fitting 14 downwardly presses the engaging projection 26b of the second hold-down section 26 of the fitting attachment section 24 and thereby flexurally deforms the second hold-down section 26 toward the back side.

In this state, when the lower surface plate 14b of the first belt attachment fitting 14 is further slid and the side portions of the lower surface plate 14b are pressed into the areas under the pair of first hold-down sections 25, these side portions of the lower surface plate 14b are pressed against the cover main body 18 and correspond to the hold-down grooves 25b of the pair of first hold-down sections 25. Here, the second hold-down section 26 flexurally deformed by the middle portion of the lower surface plate 14b resiliently returns to its original position, whereby the engaging projection 26b of the second hold-down section 26 resiliently engages with the fitting lock hole 14d of the lower surface plate 14b. As a result, the first belt attachment fitting 14 is attached to the cover main body 18.

In the present embodiment, the cover protection section 27 which reinforces the cover main body 18 is provided on the outer surface of the cover main body 18 and surrounds the fitting attachment section 24 along the outer periphery of the sliding area of the first belt attachment fitting 14, whereby a thin portion of the cover main body 18 is reinforced, or in other words, the strength of the fitting attachment section 24 is increased.

When the expansion housing recess section 15 is formed larger in the device case 1, the cover main body 18 is also formed larger, by which the strength of the entire cover main body 18 is decreased. Therefore, the thickness of the cover main body 18 is required to be increased. However, this cover main body 18 has the structure where the surrounding area of the fitting attachment section 24 has been reinforced by the cover protection section 27, and therefore the strength of the cover main body 18 is ensured by the cover protection section 27 even though it is thin.

Also, in the case of this cover main body 18, the cover protection section 27 is formed in a manner to be located on its outer surface and project in a frame shape. Accordingly, even though the cover protection section 27 is provided on the cover main body 18, this cover protection section 27 does not project into the expansion housing recess section 15. As a result, the inner space of the expansion housing recess section 15 is not constrained by the cover protection section 27, whereby the internal volume thereof is ensured and high density storage can be achieved.

Then, in the above-described state, the one end portion 12a of the hand belt 12 is inserted into and attached to the second belt attachment hole 14c provided in the upper surface plate 14a of the first belt attachment fitting 14. Also, the other end portion 12b of the hand belt 12 is attached to the first belt attachment hole 3c provided in the other end of the lower case 3 on the other end portion 1b side of the device case 1 in the longitudinal direction. As a result, the hand belt 12 is attached to the portable terminal.

Then, when using the portable terminal while holding it, the user first inserts his or her hand between the device case 1 and the hand belt 12 and holds the device case 1. Here, the fingers other than the thumb are inserted between the device case 1 and the hand belt 12 and the thumb is placed on the input display section 4 or key input section 5 of the device case 1 so as to hold the device case 1 while wrapping the fingers around the battery cover 8 of the device case 1.

In this state, the user performs an input operation on the input display section 4 or the key input section 5 with the thumb. Here, information displayed on the display panel 4a of the input display section 4 can be viewed through the transparent touch panel 4b. Accordingly, the user can perform a touch operation while viewing the information displayed on the display panel 4a.

Also, in this state, when the upper surface trigger key 5c of the key input section 5 or the side surface trigger key 1c provided on the side surface of the device case 1 is operated, the scanner section 9b of the optical reading section 9 is activated. Then, the laser reading section of the scanner section 9b irradiates the product code of a product with a laser beam through the optical window section 7c of the housing projection section 7, and receives reflected light so as to read the product code.

In addition, the camera section of the scanner section 9b captures an image of a photographic subject such as the product or the two dimensional code. As a result, the product code read by the laser reading section is registered in the memory section of the circuit board 6 while being displayed on the input display section 4 and, similarly, the image of the photographic subject such as the product or the two dimensional code captured by the camera section is registered in the memory section of the circuit board 6 while being displayed on the input display section 4.

Also, when a card such as a credit card is brought close to the housing projection section 7 of the lower case 3, the magnetic electrode 16b provided in the housing projection section 7 acquires information of the card with a magnetic field (induced electromotive force), and the acquired magnetic information signal is read as card information by the expansion board 16. This read information is also registered in the memory section of the circuit board 6.

Also, when this portable terminal is arranged on the placement surface of a table or the like, the three points, that is, the two leg sections 28 provided on the sides of the housing projection section 7 of the lower case 3 in the transverse direction and a portion of the lower case 3 on the other end portion 1b side of the device case 1, or in other words, the other end portion 12b of the hand belt 12 attached to an end portion of the lower case 3 come in contact with the placement surface.

As a result, the device case 1 is stably arranged on the placement surface since it is supported by the three points on the placement surface. Here, when the leg sections 28 provided on the sides of the housing projection section 7 are arranged on the placement surface, the flexible members 29 of the leg sections 28 are arranged on and come in contact with the placement surface, whereby slipping on the placement surface is prevented by the elastic force of the flexible members 29. By this structure as well, the device case 1 is stably arranged on the placement surface.

In this embodiment, the flexible members 29 of the leg sections 28 are formed of materials having elasticity, such as elastomer or rubber. As a result, impacts that may be exerted on the housing projection section 7 when the device case 1 is dropped or roughly placed on a placement surface are buffered by the flexible members 29, whereby the scanner section 9b housed in the housing projection section 7 is favorably protected from the impact.

If an expansion board larger than the above-described expansion board 16 is connected to the expansion connector 17 in the expansion housing recess section 15 provided in the second inclined surface 7b of the housing projection section 7 of the lower case 3, the expansion cover 13 cannot be attached to the expansion housing recess section 15. Therefore, the portable terminal is required to be used with the expansion cover 13 being detached, and accordingly an attachment position of the hand belt 12 with respect to the device case 1 is required to be changed.

In this case, the one end portion 12a of the hand belt 12 is detached from the first belt attachment fitting 14. In this state, the second belt attachment fitting 33 is attached to the pair of third belt attachment holes 32 provided in the sides of the second inclined surface 7b of the housing projection section 7 of the lower case 3 in the transverse direction perpendicular to the longitudinal direction of the device case 1.

Here, the pair of fitting mounting sections 35 provided on the ends of the fitting main body 34 of the second belt attachment fitting 33 is inserted into and attached to the first attachment holes 32a of the pair of third belt attachment holes 32. Here, when the pair of fitting mounting sections 35 is being inserted into the first attachment holes 32a of the pair of third belt attachment holes 32 from the second inclined surface 7b side of the housing projection section 7, the engaging projections 35b are pressed against the inner surfaces of the first attachment holes 32a and flexurally deformed by the presence of the slit grooves 35a.

Then, when the pair of fitting mounting sections 35 is inserted into the first attachment holes 32a of the pair of third belt attachment holes 32 from the second inclined surface 7b side of the housing projection section 7, the flexurally deformed fitting mounting sections 35 resiliently return in the directions away from each other and each engaging projection 35b disengageably engages inside the corresponding second attachment hole 32b. As a result, the second belt attachment fitting 33 is attached to the pair of third belt attachment holes 32.

In this state, the one end portion 12a of the hand belt 12 is inserted between the fitting main body 34 of the second belt attachment fitting 33 and the second inclined surface 7b of the housing projection section 7 of the lower case 3, and folded back at the fitting main body 34. As a result, the one end portion 12a of the hand belt 12 is attached to the fitting main body 34. In this case, the first belt attachment fitting 14 may be detached from the expansion cover 13 or may remain attached.

In this case as well, the user can use the portable terminal while holding it. More specifically, his or her hand is inserted between the device case 1 and the hand belt 12 so as to hold the device case 1. Here, as with the above-described case, the fingers other than the thumb are inserted between the device case 1 and the hand belt 12 and the thumb is placed on the input display section 4 or the key input section 5 of the device case 1 so as to hold the device case 1 while wrapping the fingers around the battery cover 8 of the device case 1.

On the other hand, when the user is to carry this portable terminal, the hand belt 12 may remain attached to the device case 1 or be detached from the device case 1. When the hand belt 12 is to be detached, the second belt attachment fitting 33 may be detached from the pair of third belt attachment holes 32 so as to attach a strap (not shown in the drawings) to one of the pair of third belt attachment holes 32 . Here, the string of the strap is inserted from the first attachment hole 32a of one of the third belt attachment holes 32 to the corresponding second attachment hole 32b or vice versa.

As such, this portable terminal includes the housing projection section 7 which is provided projecting in the thickness direction at a position shifted to the one end portion 1a side of the device case 1 that is a terminal main body in the longitudinal direction and in which a predetermined device is housed, and the expansion connector section 50 which is used to connect the predetermined expansion board 16. The housing projection section 7 has the second inclined surface 7b downwardly inclined from the one end portion 1a side toward the other end portion 1b side in the longitudinal direction, and the expansion connector section 50 is provided in this second inclined surface 7b. As a result of this structure, the portable terminal can be favorably carried even after its function is expanded.

That is, in this portable terminal, the expansion connector section 50 is provided in the housing projection section 7 with it being inclined in the longitudinal direction of the device case 1. Accordingly, when being connected to the expansion connector section 50, the expansion board 16 which expands the function or the like can be obliquely arranged on the housing projection section 7. As a result of this structure, the device case 1 can be downsized, and the portable terminal can be favorably carried even after its function is expanded.

In this embodiment, the expansion connector section 50 includes the expansion connector 17 that is a terminal section for electrically connecting the expansion board 16, and the expansion housing recess section 15 for housing the expansion board 16 connected to the expansion connector 17. The expansion connector 17 is provided in the bottom surface portion of the expansion housing recess section 15. That is, by the presence of the expansion housing recess section 15, the expansion connector 17 can be provided in the housing projection section 7 without protruding from the second inclined surface 7b of the housing projection section 7.

Also, in this portable terminal, the expansion connector 17 that is a terminal section is provided such that the expansion board 16 can be mounted in parallel with the second inclined surface 7b. Accordingly, when the board connector 16a of the expansion board 16 having an expansion function is connected to the expansion connector 17, the expansion board 16 is obliquely arranged along the second inclined surface 7b of the housing projection section 7. By this structure as well, the device case 1 can be downsized, and the portable terminal can be favorably carried even after its function is expanded.

In addition, the expansion connector 17 that is a terminal section is provided such that its length in the longitudinal direction of the device case 1 is shorter than its length in the transverse direction of the device case 1. Accordingly, the user can easily tilt the expansion board 16 in the transverse directions of the device case 1 when inserting the board connector 16a into the expansion connector 17 while holding side portions of the expansion board 16 located in the transverse direction of the device case 1 with fingertips, and thereby can easily and favorably insert the board connector 16a of the expansion board 16 into the expansion connector 17.

Also, in this portable terminal, the expansion connector section 50 includes the expansion cover 13 that is a cover body for covering the expansion housing recess section 15, and the housing projection section 7 has the screw holes 22c into which the mounting screws 21 for attaching the expansion cover 13 are screwed. These screw holes 22c are formed extending in the thickness direction of the device case 1. As a result of this structure, when the expansion cover 13 is to be attached to the expansion housing recess section 15, the mounting screws 21 can be screwed into the screw holes 22c of the housing projection section 7 in the thickness direction of the device case 1, that is, the direction substantially perpendicular to the longitudinal direction of the device case 1, whereby the attachment projection sections 18a of the expansion cover 13 can be reliably and firmly attached to the cutout sections 22 of the expansion housing recess section 15.

Moreover, in this portable terminal, the expansion connector section 50 is provided at a position shifted toward the other end portion 1b side of the device case 1, in the second inclined surface 7b. Accordingly, the expansion connector section 50 does not obstruct the use of the portable terminal and the user can favorably use the portable terminal while holding the device case 1.

Furthermore, in this portable terminal, the scanner section 9b of the optical reading section 9 that is imaging means is housed in the housing projection section 7. As a result of this structure, the device case 1 can be downsized. In this embodiment, the scanner section 9b is provided on the unit case 9a of the optical reading section 9 provided on the upper case 2 corresponding to the housing projection section 7 of the lower case 3, and is arranged in the housing projection section 7 of the lower case 3 when the upper case 2 and the lower case 3 are attached to each other so as to assemble the device case 1. That is, the assembling work is efficiently performed.

In the above-described embodiment, one expansion connector 17 is provided in the expansion housing recess section 15 in the second inclined surface 7b of the housing projection section 7. However, the present invention is not limited thereto. For example, a plurality of expansion connectors may be provided. With this structure, more functions can be expanded by the plurality of expansion connectors.

Also, in the above-described embodiment, the expansion board 16 is a card reading board which reads information of a card such as a credit card in a non-contact manner. However, the present invention is not limited thereto. For example, the expansion board 16 may be a sensor board equipped with a sensor such as a temperature sensor (thermostat camera), a pressure sensor, an infrared sensor, a distance sensor, and a biometrics sensor (a fingerprint sensor or a pulse sensor), or a communication board equipped with a communication function.

Moreover, in the above-described embodiment, the fixing shafts 30b of the rigid members 30 of the leg sections 28 are fixed in the leg attachment holes 31 of the housing projection section 7 by the welding sections 30c. However, the present invention is not limited thereto. For example, the fixing shafts 30b may be fixed in the leg attachment holes 31 of the housing projection section 7 by screws or stopper components such as E-rings and split pins.

## Claims

1. An information terminal comprising:
a housing projection section (7) which is provided at a position shifted to one end side of a terminal main body (1) in a longitudinal direction while projecting in a thickness direction of the terminal main body (1), and in which a device is housed;
an expansion connector section (50) which is used to connect an expansion board (16), wherein the expansion connector section (50) includes a terminal section (17) to which the expansion board (16) is electrically connected,
wherein the housing projection section (7) includes a first inclined surface (7a) downwardly inclined from an other end side toward the one end side in the longitudinal direction, and
wherein the device is provided in the first inclined surface (7a),
**characterized by**:
a second inclined surface (7b) downwardly inclined from the one end side toward the other end side in the longitudinal direction, and
wherein the expansion connector section (50) is provided in the second inclined surface (7b) and includes a housing recess section (15) which houses the expansion board (16) connected to the terminal section (17) and a cover body (13) which covers the housing recess section (15),
the terminal section (17) is provided in a bottom surface portion of the housing recess section (15),
the housing projection section (7) has a screw hole (22c) into which a screw that is used to attach the cover body (13) is screwed, and
the screw hole (22c) is formed extending in the thickness direction.

2. The information terminal according to claim 1, wherein the terminal section (17) is provided such that the expansion board (16) is connectable thereto in parallel with the inclined section (7b).

3. The information terminal according to claim 1, wherein the terminal section (17) is provided such that a length thereof in the longitudinal direction is shorter than a length thereof in a transverse direction of the terminal main body (1).

4. The information terminal according to claim 1, wherein the expansion connector section (50) is provided at a position shifted toward the other end side in the second inclined surface (7b).

5. The information terminal according to claim 1, wherein the housing projection section (7) has an imaging means housed therein.

6. The information terminal according to claim 1, further comprising:
a key input section (5) provided at a position shifted to the other end side of the terminal main body (1) in the longitudinal direction.

7. The information terminal according to claim 6, wherein the key input section (5) is provided on a front surface side of the terminal main body (1), and
wherein the housing projection section (7) is provided on a back surface side of the terminal main body (1).

8. The information terminal according to claim 1, wherein the housing projection section (7) is provided on a side opposite to a display section.

9. The information terminal according to claim 1, wherein the expansion board (16) is a card reading board, a sensor board, or a communication board.

10. The information terminal according to claim 1, wherein the expansion connector section (50) is provided in a middle area in a transverse direction of the terminal main body (1).

11. The information terminal according to claim 1, wherein a portion of the other end side of the first inclined surface (7a) and a portion of the one end side of the second inclined surface (7b) are connected on a top part of a back surface side of the terminal main body (1).

12. The information terminal according to claim 11, wherein the top part protrudes most on the back surface side of the terminal main body (1).

## Patentansprüche

1. Informations-Endgerät, das umfasst:
einen Aufnahme-Vorsprungsabschnitt (7), der sich an einer Position befindet, die in einer Längsrichtung zu einer Endseite eines Anschluss-Hauptkörpers (1) verschoben ist, und in einer Dickenrichtung des Anschluss-Hauptkörpers (1) vorsteht und in dem eine Vorrichtung aufgenommen ist;
einen Erweiterungs-Verbinderabschnitt (50), der zum Anschließen einer Erweiterungsplatine (16) dient, wobei der Erweiterungs-Verbinderabschnitt (50) einen Anschlussabschnitt (17) enthält, mit dem die Erweiterungsplatine (16) elektrisch verbunden ist,
wobei der Aufnahme-Vorsprungsabschnitt (7) eine erste geneigte Fläche (7a) enthält, die von einer anderen Endseite zu der einen Endseite hin in der Längsrichtung nach unten geneigt ist, und
wobei sich die Vorrichtung an der ersten geneigten Fläche (7a) befindet,
**gekennzeichnet durch**:
eine zweite geneigte Fläche (7b), die von der einen Endseite zu der anderen Endseite hin in der Längsrichtung nach unten geneigt ist, und
wobei sich der Erweiterung-Verbinderabschnitt (50) an der zweiten geneigten Fläche (7b) befindet und einen Aufnahme-Aussparungsabschnitt (15), der die mit dem Anschlussabschnitt (17) verbundene Erweiterungsplatine (16) aufnimmt, sowie einen Abdeckungskörper (13) enthält, der den Aufnahme-Aussparungabschnitt (15) abdeckt,
der Anschlussabschnitt (17) sich an einem Bodenflächen-Teil des Aufnahme-Aussparungsabschnitts (15) befindet,
der Aufnahme-Vorsprungsabschnitt (7) ein Schraubenloch (22c) aufweist, in das eine Schraube eingeschraubt ist, die zum Anbringen des Abdeckungskörpers (13) dient, und das Schraubenloch (22) so ausgebildet ist, dass es sich in der Dickenrichtung erstreckt.

2. Informations-Endgerät nach Anspruch 1, wobei der Anschlussabschnitt (17) so eingerichtet ist, dass die Erweiterungsplatine (16) parallel zu dem geneigten Abschnitt (7b) damit verbunden werden kann.

3. Informations-Endgerät nach Anspruch 1, wobei der Anschlussabschnitt (17) so eingerichtet ist, dass eine Länge desselben in der Längsrichtung kürzer ist als eine Länge desselben in einer Querrichtung des Anschluss-Hauptkörpers (1).

4. Informations-Endgerät nach Anspruch 1, wobei der Erweiterungs-Verbinderabschnitt (50) sich an einer Position an der zweiten geneigten Fläche (7b) befindet, die zu der anderen Endseite hin verschoben ist.

5. Informations-Endgerät nach Anspruch 1, wobei in dem Aufnahme-Vorsprungsabschnitt (7) eine Bilderzeugungseinrichtung aufgenommen ist.

6. Informationen Endgerät nach Anspruch 1, das des Weiteren umfasst:
einen Tasten-Eingabeabschnitt (5), der sich an einer Position befindet, die zu der anderen Endseite des Anschluss-Hauptkörpers (1) in der Längsrichtung verschoben ist.

7. Informations-Endgerät nach Anspruch 6, wobei sich der Tasten-Eingabeabschnitt (5) an einer Seite der vorderen Fläche des Anschluss-Hauptkörpers (1) befindet, und
sich der Aufnahme-Vorsprungsabschnitt (7) an einer Seite der hinteren Fläche des Anschluss-Hauptkörpers (1) befindet.

8. Informations-Endgerät nach Anspruch 1, wobei sich der Aufnahme-Vorsprungsabschnitt (7) an einer einem Anzeigeabschnitt gegenüberliegenden Seite befindet.

9. Informations-Endgerät nach Anspruch 1, wobei die Erweiterungsplatine (16) eine Kartenlese-Platine, eine Sensor-Platine oder eine Kommunikations-Platine ist.

10. Informations-Endgerät nach Anspruch 1, wobei sich der Erweiterung-Verbinderabschnitt (50) in einem mittleren Bereich in einer Querrichtung des Anschluss-Hauptkörpers (1) befindet.

11. Informations-Endgerät nach Anspruch 1, wobei ein Teil der anderen Endseite der ersten geneigten Fläche (7a) und ein Teil der einen Endseite der zweiten geneigten Fläche (7b) an einem oberen Teil einer Seite der hinteren Fläche des Anschluss-Hauptkörpers (1) verbunden sind.

12. Informations-Endgerät nach Anspruch 11, wobei der obere Teil an der Seite der hinteren Fläche des Anschluss-Hauptkörpers (1) am weitesten vorsteht.

## Revendications

1. Terminal d'information comprenant :
une partie projection de boîtier (7) qui est fournie à une position décalée par rapport à un côté d'extrémité d'un corps principal de terminal (1) dans une direction longitudinale tout en faisant saillie dans une direction d'épaisseur du corps principal de terminal (1), et dans laquelle un dispositif est logé ;
une partie connecteur d'extension (50) utilisée pour connecter une carte d'extension (16), dans laquelle la partie connecteur d'extension (50) comprend une partie terminal (17) à laquelle la carte d'extension (16) est électriquement connectée,
dans laquelle la partie projection du boîtier (7) comprend une première surface inclinée (7a) inclinée vers le bas à partir d'un autre côté d'extrémité vers le premier côté d'extrémité dans la direction longitudinale, et
dans lequel le dispositif est prévu dans la première surface inclinée (7a),
**caractérisé par** :
une seconde surface inclinée (7b) inclinée vers le bas à partir de l'une des extrémités vers l'autre extrémité dans la direction longitudinale, et
dans laquelle la partie connecteur d'extension (50) est prévue dans la seconde surface inclinée (7b) et comprend une partie évidement du boîtier (15) qui abrite la carte d'extension (16) connectée à la partie terminal (17) et un corps de couvercle (13) qui recouvre la partie évidement du boîtier (15),
la partie borne (17) est prévue dans une partie de la surface inférieure de la partie évidement du boîtier (15),
la partie projection du boîtier (7) comporte un trou de vis (22c) dans lequel est vissée une vis utilisée pour fixer le corps de couverture (13), et
le trou de vis (22c) est formé et s'étend dans la direction de l'épaisseur.

2. Terminal d'information selon la revendication 1, dans lequel la partie terminal (17) est prévue pour que la carte d'extension (16) puisse y être connectée en parallèle avec la partie inclinée (7b).

3. Terminal d'information selon la revendication 1, dans lequel la partie terminal (17) est prévue pour que sa longueur dans la direction longitudinale soit plus courte que sa longueur dans la direction transversale du corps principal du terminal (1).

4. Terminal d'information selon la revendication 1, dans lequel la partie connecteur d'extension (50) est fournie à une position décalée vers l'autre côté de l'extrémité dans la seconde surface inclinée (7b).

5. Terminal d'information selon la revendication 1, dans lequel la partie projection du boîtier (7) comporte un moyen d'imagerie.

6. Terminal d'information selon la revendication 1, comprenant en outre :
une partie entrée de clé (5) située à une position décalée par rapport à l'autre extrémité du corps principal du terminal (1) dans la direction longitudinale.

7. Terminal d'information selon la revendication 6, dans lequel la partie entrée des touches (5) est fournie sur une face avant du corps principal du terminal (1), et dans lequel la partie projection du boîtier (7) est fournie sur une surface arrière du corps principal du terminal (1).

8. Terminal d'information selon la revendication 1, dans lequel la partie projection du boîtier (7) est prévue sur un côté opposé à une partie affichage.

9. Terminal d'information selon la revendication 1, dans lequel la carte d'extension (16) est une carte de lecture de cartes, une carte de capteurs ou une carte de communication.

10. Terminal d'information selon la revendication 1, dans lequel la partie connecteur d'extension (50) est fournie dans une zone centrale dans une direction transversale du corps principal du terminal (1).

11. Terminal d'information selon la revendication 1, dans lequel une partie de l'autre extrémité de la première surface inclinée (7a) et une partie de l'une des extrémités de la seconde surface inclinée (7b) sont reliées à une partie supérieure d'une surface arrière du corps principal du terminal (1).

12. Terminal d'information selon la revendication 11, dans lequel la partie supérieure dépasse le plus sur la surface arrière du corps principal du terminal (1).
